(19) Europäisches Patentamt
European Patent Office
Office européen des brevets

(11) EP 4 549 483 A1

(12) EUROPEAN PATENT APPLICATION

(43) Date of publication:
**07.05.2025 Bulletin 2025/19**

(21) Application number: **23206759.5**

(22) Date of filing: **30.10.2023**

(51) International Patent Classification (IPC):
***C08G 59/18*** *(2006.01)* ***C08G 59/50*** *(2006.01)*
***C08G 59/68*** *(2006.01)* ***C08L 63/00*** *(2006.01)*
***C08G 59/06*** *(2006.01)* ***C08G 59/14*** *(2006.01)*

(52) Cooperative Patent Classification (CPC):
(C-Sets available)
**C08L 63/00; C08G 59/066; C08G 59/1433; C08G 59/4021; C08G 59/50; C08G 59/686** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Henkel AG & Co. KGaA**
**40589 Düsseldorf (DE)**

(72) Inventors:
- **Benomar, Mustapha**
  **47137 Duisburg (DE)**
- **Okuno, Hiroko**
  **Yokohama, Kanagawa, 235-0017 (JP)**
- **Klotz, Michael**
  **40597 Düsseldorf (DE)**
- **Kumar, Girdhari**
  **411027 Pune (IN)**
- **Ohkubo, Makoto**
  **Kanagawa, 253-0025 (JP)**

# (54) ONE COMPONENT COMPOSITION BASED ON EPOXY RESINS

(57) An one component (IK) curable composition comprising, based on the weight of the composition:
from 50 to 90 wt.% of a) at least one epoxy resin which has been modified with a hydrophobic elastomer, said modified epoxy resin having an epoxide equivalent weight of from 200 to 1000 g/eq;
from 2 to 25 wt.% of b) at least one epoxy resin distinct from the modified resin of part a);
c) at least one compound which provides at least two amine hydrogens reactive toward epoxide groups; and,
from 0.01 to 5 wt.% of d) at least one accelerator,
wherein the composition preferably is characterized by a molar ratio of epoxide groups to epoxide-reactive groups ($E^R$) of $0.7:1 < E^R \leq 3:1$.

EP 4 549 483 A1

(52) Cooperative Patent Classification (CPC): (Cont.)

C-Sets
**C08L 63/00, C08L 63/00**

## Description

### FIELD OF THE INVENTION

The present invention is directed to an one component (1K) curable composition based on epoxy resins. More particularly, the invention is directed to an one component (1K) curable composition based on elastomer modified epoxy resins and of which the cured product demonstrates efficacious corrosion resistance and damping properties.

### BACKGROUND OF THE INVENTION

Epoxy resins have found a broad range of application, predominantly on the basis that a particular selection of resin and cross-linking agent (or curative) can allow the properties of the cured epoxy resin to be tailored to achieve specific performance characteristics.

That versatility being acknowledged, properly cured epoxy resins also possess a plurality of other positive attributes including *inter alia:* excellent chemical resistance, particularly to alkaline environments; high tensile and compressive strengths; high fatigue strength; low shrinkage upon cure; and, electrical insulation properties and retention thereof upon aging or environmental exposure.

Recently authors have investigated the utility of cured epoxy resins as adhesives which are employed within automotives and, more particularly, within structures which are disposed along the transmission path of vibration and noise within automotives. Vibration and noise are predominantly generated from the drive systems of the automotive - such as the engine, wheels and tires - and are transmitted to the passenger compartment along a transmission path through components of the automotive body. In addition to providing an adhesive function for those components, cured epoxy resins may serve as a damping material.

The term *"damping"* is used herein in accordance with its conventional meaning of restraining vibratory motion - such as mechanical oscillations, noise and alternating electric currents - by the dissipation of energy.

JPH02150484A (Sunstar Engineering Inc.) provides an adhesive having utility in providing a car body with the property of vibration-damping at a loss ratio (*tangent of delta, tan* $\delta$) of dynamic visco-elasticity of at least 0.2. The adhesive composition comprises, based on the weight of the composition: a) 5 - 80 wt.% of a rubber-modified epoxy resin produced by the reaction of a bisphenol A epoxy resin with a butadiene-acrylonitrile-(meth)acrylic acid copolymer; b) 5 - 80 wt.% of an urethane-modified epoxy resin; c) 0.1 - 40 wt.% of a bisphenol A epoxy resin; d) 5 - 80 wt.% of an epoxy resin composition containing rubber particles attached with inorganic fine powder on the surface and dispersed in the resin; e) 0.1 - 40 wt.% of a dimer acid glycidyl ester epoxy resin; and, f) 0.1 - 30 wt.% of a latent curing agent.

US2010/092733 A1 (Blank et al.) discloses a reinforcing system for reinforcing a cavity of a structural element, a carrier element being connected to the structural element for reinforcement purposes. The system is further provided with a support element having channels: an adhesive is disposed in the cavity between the carrier element and the structural element, wherein the adhesive is introduced into the cavity between the support element and the structural element by means of the channels. The adhesive may be an one-component or two-component composition for which epoxide resins are provided as the base resins. Such a reinforcing system and mode of application of the adhesives is complex and may not be appropriate for certain articles of manufacture.

US2019/062611 A1 (Nishida et al.) describes an one-component type thermosetting adhesive composition comprising an epoxy resin and an amine-based latent curing agent, wherein the epoxy resin comprises: (1) a dibasic acid ester-based epoxy resin; (2) a butadiene-acrylonitrile copolymer modified epoxy resin; and, (3) an unmodified bisphenol A type epoxy resin. The thermally cured product formed from the composition has: a loss ratio (tan $\delta$) at 23°C of not less than 0.2 as a damping performance; and, a Young's modulus of not less than 50 MPa.

It will be recognized that structural adhesives employed in automotive components are often required to demonstrate flexural movement: this imposes a requirement of flexibility on the adhesive or sealant for such components. Furthermore, such adhesives will also be exposed to contaminants associated with the manufacture, use and repair of the components: oil and grease may be mentioned in this context. Thus, whilst it is considered that the damping properties of known adhesives should be improved, it is important that such improvements do not compromise the flexibility and corrosion resistance of the adhesives.

### STATEMENT OF THE INVENTION

In accordance with a first aspect of the present invention there is provided an one component (1K) curable composition comprising, based on the weight of the composition:

from 50 to 90 wt.% of a) at least one epoxy resin which has been modified with a hydrophobic elastomer, said modified epoxy resin having an epoxide equivalent weight of from 200 to 1000 g/eq;

from 2 to 25 wt.% of b) at least one epoxy resin distinct from the modified resin of part a);
c) at least one compound which provides at least two amine hydrogens reactive toward epoxide groups; and,
from 0.01 to 5 wt.% of d) at least one accelerator,

wherein the composition preferably is characterized by a molar ratio of epoxide groups to epoxide-reactive groups ($E^R$) of $0.7:1 < E^R \leq 3.0:1$.

It is desired that the one component (1K) curable composition comprises, based on the weight of the composition:

from 60 to 90 wt.%, preferably from 65 to 85 wt.% of a) at least one epoxy resin which has been modified with a hydrophobic elastomer, said modified epoxy resin having an epoxide equivalent weight of from 200 to 1000 g/eq;
from 3 to 20 wt.%, preferably from 5 to 10 wt.% of b) at least one epoxy resin distinct from the modified resin of part a);
from 1 to 15 wt.%, preferably from 1 to 10 wt.% of c) at least one compound which provides at least two amine hydrogens reactive toward epoxide groups; and,
from 0.01 to 2 wt.%, preferably from 0.01 to 1 wt.% of d) at least one accelerator,

wherein the composition is characterized by a molar ratio of epoxide groups to epoxide-reactive groups ($E^R$) of from 0.9:1 to 2.0:1, more preferably from 1.1:1 to 1.6:1.

In certain important embodiment, part a) of the composition comprises, based on the weight of the composition:

from 60 to 80 wt.% of ai) at least one dimer acid-modified epoxy resin; and,
from 5 to 20 wt.% of aii) at least one elastomer modified resin selected from the group consisting of carboxyl-terminated poly(butadiene-acrylonitrile) (CTBN) modified epoxy resins and urethane modified epoxy resins,
wherein each modified resin of part a) is characterized by an epoxide equivalent weight of from 200 to 800 g/eq, preferably from 250 to 750 g/eq. In particular, good results have been obtained where: the or each dimer acid-modified epoxy resin of part ai) is characterized by an epoxide equivalent weight of from 500 to 750 g/eq; and / or the or each elastomer modified resin of part aii) is characterized by an epoxide equivalent weight of from 250 to 500 g/eq.

In further important embodiments, which are not mutually exclusive of those mentioned above, part d) of the composition comprises or consists of at least one accelerator selected from the group consisting of: tertiary amines; urea derivatives; thiourea derivatives; and, amidines.

In particular, part d) may comprise or consist of at least one compound in accordance with Formula (I) or Formula (II):

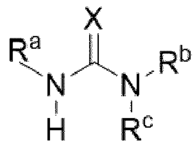

or,

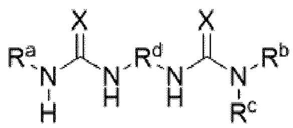

(I) (II)

wherein:

X is O or S;
$R^a$, $R^b$ and $R^c$ are independently selected from $C_1$-$C_{12}$ alkyl, $C_1$-$C_{12}$ hydroxyalkyl, $C_3$-$C_{18}$ cycloalkyl or $C_6$-$C_{18}$ aryl; and,
$R^d$ is $C_6$-$C_{18}$ arylene or $C_7$-$C_{18}$ alkylarylene.

Effective curing of the composition has been demonstrated using compounds of Formula (I) or Formula (II) wherein: X is O; $R^a$, $R^b$ and $R^c$ are independently selected from $C_1$-$C_8$ alkyl, $C_1$-$C_8$ hydroxyalkyl, $C_3$-$C_{12}$ cycloalkyl or $C_6$ aryl; and, $R^d$ is $C_6$-$C_{18}$ arylene or $C_7$-$C_{18}$ alkylarylene.

The composition may, in certain embodiments, further comprise core shell rubber particles in an amount up to 10 wt.% based on the total weight of the composition. Independently of or additional to this stated preference, the composition is desirably characterized by a viscosity of from 100 to 500 Pa.s, preferably from 200 to 500 Pa.s, as determined at 20°C at a shear rate of 15.5 $s^{-1}$.

In accordance with a further aspect of the present invention, there is provided a cured product obtained from the one component (1K) composition as defined hereinabove and in the appended claims. The cured product is preferably characterized by a loss factor (*tan* $\delta$) of at least 0.3 as determined by Dynamic Mechanical Analysis (DMA) at 1Hz and

40°C.

This cured reaction product has utility as an adhesive or sealant and, in particular, as an adhesive or sealant for shaped and jointed metallic components. For example, the use of the cured product as an effective, flexible adhesive or sealant for shaped and jointed metallic components in vehicle assembly and repair has been demonstrated.

## DEFINITIONS

As used herein, the singular forms *"a", "an"* and *"the"* include plural referents unless the context clearly dictates otherwise.

The terms *"comprising", "comprises"* and "*comprised of*" as used herein are synonymous with *"including", "includes", "containing"* or *"contains",* and are inclusive or open-ended and do not exclude additional, non-recited members, elements or method steps.

As used herein, the term "*consisting of*" excludes any element, ingredient, member or method step not specified. For completeness, the term *"comprising"* encompasses "*consisting of*".

The words *"preferred', "preferably", "desirably"* and *"particularly"* are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

The word *"exemplary"* is used herein to mean serving as an example, instance, or illustration. Any aspect or design described herein as *"exemplary"* is not necessarily to be construed as preferred or advantageous over other aspects or designs. Rather, use of the word exemplary is intended to present concepts in a concrete fashion.

As used throughout this application, the word *"may"* is used in a permissive sense - that is meaning to have the potential to - rather than in the mandatory sense.

The term *"plurality"* as used herein is defined as two or more than two.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

Further, in accordance with standard understanding, a weight range represented as being *"from 0 to x"* specifically includes 0 wt.%: the ingredient or part - a) or b) herein, for example - defined by said range may be absent from the material or may be present in the material in an amount up to x wt.%.

The molecular weights referred to in this specification can be measured with gel permeation chromatography (GPC) using polystyrene calibration standards, such as is done according to ASTM 3536.

Where mentioned, a calculated glass transition temperature ("$T_g$") of a polymer or co-polymer is that temperature which may be calculated by using the Fox equation:

$$1/T_{g,polymer} \approx \sum_i w_i / T_{g,i}$$

where: $T_{g,polymer}$ and $T_{g,i}$ are the glass transition temperature of the (co-)polymer and of the component monomers (i) respectively; and, $w_i$ is the mass fraction of component i. The glass transition temperatures of certain homopolymers may be found in the published literature.

The actual glass transition temperature ($T_g$) of a (co-)polymer can be determined by Dynamic Mechanical Analysis (DMA) in accordance with ASTM E1640 *Standard TestMethodfor Assignment of the Glass Transition Temperature By Dynamic Mechanical Analysis* (DMA).

The term *"storage modulus"* (E') is used herein in accordance with its standard meaning in the art as a measurement of the energy stored in an specimen during a load phase. The storage modulus values are determined by Dynamic Mechanical Analysis (DMA) unless otherwise indicated.

*"Loss modulus"* (E") is a measure of the energy dissipated from a specimen during a load phase and is also determined herein by Dynamic Mechanical Analysis (DMA) unless otherwise indicated. The loss factor or tan $\delta$ references the ratio of the loss modulus (E") to the storage modulus (E'): tan $\delta$ = (E"/E'). The loss factor may be identified in the art as the *"damping factor".*

Viscosities of the materials described herein are, unless otherwise stipulated, measured using the Anton Paar Viscometer, Model MCR 72 at the stated temperature and 50% Relative Humidity (RH). The viscometer is calibrated one time a year and checked by services. The calibration is done using standard liquids of known viscosity from 1 to 50,000 cps (parallel plate PP20 and at shear rate 1 $s^{-1}$ at 23°C). Measurements of the materials according to the present invention are done using the parallel plate PP20 at different shear rates from 1.5 to 100 $s^{-1}$.

As used herein, room temperature is 23°C plus or minus 2°C.

As used herein, *"ambient conditions"* means the temperature and pressure of the surroundings in which the composition is located or in which a coating layer or the substrate of said coating layer is located.

The term *"hydrophobic"* herein qualifies a material or a component thereof which has a high contact angle with water; the contact angle of formed between the surface of the material or the component thereof is at least 90°C.

It will be understood that the term *"vehicle"* as used herein shall be construed broadly to include any means of motorized conveyance, such as automobiles, motorcycles, trucks, water craft, aircraft, trailers and off-road vehicles. The compositions of the present disclosure and the cured products obtained therefrom are considered to have particular utility as adhesives or sealants for automobile manufacture and repair.

As used herein, the term *"equivalent (eq.")* relates, as is usual in chemical notation, to the relative number of reactive groups present in the reaction.

The term *"equivalent weight"* as used herein refers to the molecular weight divided by the number of a function concerned. As such, *"epoxy equivalent weight"* (EEW) means the weight of resin, in grams, that contains one equivalent of epoxy. Equally, the *"amine hydrogen equivalent weight"* (AHEW) is the weight of the organic amine, in grams, that contains one amine hydrogen.

As used herein, the term *"(co)polymer"* includes homopolymers, copolymers, block copolymers and terpolymers.

As used herein, the term *"epoxide"* denotes a compound characterized by the presence of at least one cyclic ether group, namely one wherein an ether oxygen atom is attached to two adjacent carbon atoms thereby forming a cyclic structure. The term is intended to encompass monoepoxide compounds, polyepoxide compounds (having two or more epoxide groups) and epoxide terminated prepolymers. The term *"monoepoxide compound"* is meant to denote epoxide compounds having one epoxy group. The term *"polyepoxide compound*" is meant to denote epoxide compounds having at least two epoxy groups. The term *"diepoxide compound"* is meant to denote epoxide compounds having two epoxy groups.

The epoxide may be unsubstituted but may also be inertly substituted. Exemplary inert substituents include chlorine, bromine, fluorine and phenyl.

As employed herein a *"primary amino group"* refers to an $NH_2$ group that is attached to an organic radical, and a *"secondary amino group"* refers to an NH group that is attached to two organic radicals, which may also together be part of a ring. Where used, the term *"amine hydrogen"* refers to the hydrogen atoms of primary and secondary amino groups.

Where *"amine number"* is mentioned herein, this is determinable by titration of the amine acetate ion by a dilute, typically 1N HCl solution. For a pure material, the amine number can be calculated using the molecular weights of the pure compound and KOH (56.1 g/mol).

The term *"latent"* as used herein is meant to refer to an inert functional group which can be selectively converted to a reactive functional group at the appropriate point in the synthetic sequence: the triggering event for this conversion may be *inter alia* moisture, heat or irradiation.

The term *"accelerator"* as used herein refers to a chemical agent that is co-reactive with the curative and which reduces the cure time of the composition relative to that achievable with said curative alone under equivalent conditions.

As used herein, "$C_1$-$C_n$ *alkyl"* group refers to a monovalent group that contains 1 to n carbons atoms, that is a radical of an alkane and includes straight-chain and branched organic groups. As such, a *"$C_1$-$C_{18}$ alkyl"* group refers to a monovalent group that contains from 1 to 18 carbons atoms, that is a radical of an alkane and includes straight-chain and branched organic groups. Examples of alkyl groups include, but are not limited to: methyl; ethyl; propyl; isopropyl; n-butyl; isobutyl; sec-butyl; tert-butyl; n-pentyl; n-hexyl; n-heptyl; and, 2-ethylhexyl. In the present invention, such alkyl groups may be unsubstituted or may be substituted with one or more halogen. Where applicable for a given moiety (R), a tolerance for one or more non-halogen substituents within an alkyl group will be noted in the specification.

The term *"$C_1$-$C_{18}$hydroxyalkyl*" as used herein refers to a HO-(alkyl) group having from 1 to 18 carbon atoms, wherein the alkyl group is as defined above.

An *"alkoxy group"* refers to a monovalent group represented by -OA where A is an alkyl group: non-limiting examples thereof are a methoxy group, an ethoxy group and an iso-propyloxy group. The term *"$C_1$-$C_{18}$ alkoxyalkyl"* as used herein refers to an alkyl group having an alkoxy substituent as defined above and wherein the moiety (*alkyl-O-alkyl*) comprises in total from 1 to 18 carbon atoms: such groups include methoxymethyl ($-CH_2OCH_3$), 2-methoxyethyl ($-CH_2CH_2OCH_3$) and 2-ethoxyethyl. Analogously, the term *"$C_7$-$C_{18}$ alkoxyaryl"* as used herein refers to an aryl group having an alkoxy substituent as defined above and wherein the moiety (*aryl-O-alkyl*) comprises in total from 7 to 18 carbon atoms.

The term *"$C_2$-$C_4$ alkylene"* as used herein, is defined as saturated, divalent hydrocarbon radical having from 2 to 4 carbon atoms.

The term *"$C_3$-$C_{18}$ cycloalkyl"* is understood to mean a saturated, mono- or polycyclic hydrocarbon group having from 3 to 18 carbon atoms. In the present invention, such cycloalkyl groups may be unsubstituted or may be substituted with one or more halogen. Where applicable for a given moiety (R), a tolerance for one or more non-halogen substituents within a cycloalkyl group will be noted in the specification. Examples of cycloalkyl groups include: cyclopropyl; cyclobutyl; cyclopentyl; cyclohexyl; cycloheptyl; cyclooctyl; adamantane; and, norbornane.

As used herein, *"$C_2$-$C_{18}$ alkenyl"* refers to hydrocarbyl groups having from 2 to 18 carbon atoms and at least one unit of ethylenic unsaturation. The alkenyl group can be straight chained, branched or cyclic and may optionally be substituted with one or more halogen. Where applicable for a given moiety (R), a tolerance for one or more non-halogen substituents within an alkenyl group will be noted in the specification. The term *"alkenyl"* also encompasses radicals having *"cis"* and *"trans"* configurations, or alternatively, *"E"* and *"Z"* configurations, as appreciated by those of ordinary skill in the art. Examples of said $C_2$-$C_{20}$ alkenyl groups include, but are not limited to: $-CH=CH_2$; $-CH=CHCH_3$; $-CH_2CH=CH_2$; $-C(=CH_2)(CH_3)$; $-CH=CHCH_2CH_3$; - $CH_2CH=CHCH_3$; $-CH_2CH_2CH=CH_2$; $-CH=C(CH_3)_2$; $-CH_2C(=CH_2)(CH_3)$; $-C(=CH_2)CH_2CH_3$; - $C(CH_3)=CHCH_3$; $-C(CH_3)CH=CH_2$; $-CH=CHCH_2CH_2CH_3$; $-CH_2CH=CHCH_2CH_3$; - $CH_2CH_2CH=CHCH_3$; $-CH_2CH_2CH_2CH=CH_2$; $-C(=CH_2)CH_2CH_2CH_3$; $-C(CH_3)=CHCH_2CH_3$; - $CH(CH_3)CH=CHCH$; $-CH(CH_3)CH_2CH=CH_2$; $-CH_2CH=C(CH_3)_2$; 1-cyclopent-1-enyl; 1-cyclopent-2-enyl; 1-cyclopent-3-enyl; 1-cyclohex-1-enyl; 1-cyclohex-2-enyl; and, 1-cyclohexyl-3-enyl.

As used herein, an *"$C_6$-$C_{18}$ aryl"* group used alone or as part of a larger moiety - as in *"aralkyl group"* - refers to monocyclic, bicyclic and tricyclic ring systems in which the monocyclic ring system is aromatic or at least one of the rings in a bicyclic or tricyclic ring system is aromatic. The bicyclic and tricyclic ring systems include benzofused 2-3 membered carbocyclic rings. In the present invention, such aryl groups may be unsubstituted or may be substituted with one or more halogen. Where applicable for a given moiety (R), a tolerance for one or more non-halogen substituents within an aryl group will be noted in the specification. Exemplary aryl groups include: phenyl; ($C_1$-$C_4$)alkylphenyl, such as tolyl and ethylphenyl; 1,1'-biphenyl; indenyl; naphthalenyl, tetrahydronaphthyl, tetrahydroindenyl; tetrahydroanthracenyl; and, anthracenyl. And a preference for phenyl groups may be noted.

The term *"$C_6$-$C_{18}$ arylene group"* as used herein refers to a divalent radical having from 6 to 18 carbon atoms and which is derived from an monocyclic, bicyclic and tricyclic ring systems in which the monocyclic ring system is aromatic or at least one of the rings in a bicyclic or tricyclic ring system is aromatic. The arylene group may be substituted by at least one halogen substituent but the aromatic portion of the arylene group includes carbon atoms only. Exemplary *"$C_6$-$C_{18}$ arylene"* groups include phenylene and naphthalene-1,8-diyl.

As used herein, *"aralkyl"* means an alkyl group substituted with an aryl radical as defined above. Further, as used herein *"alkylaryl"* refers to alkyl-substituted aryl groups, both groups being defined as above. And the term *"alkarylene"* denotes a divalent radical being an alkyl substituted aryl radical, wherein one hydrogen at any position of the alkyl carbon backbone is replaced by a further binding site. Examples of alkarylene groups include methylphenylene, ethylphenylene and methyl diphenylene.

The term *"hetero"* as used herein refers to groups or moieties containing one or more heteroatoms, such as N, O, Si and S. Thus, for example *"heterocyclic"* refers to cyclic groups having, for example, N, O, Si or S as part of the ring structure. *"Heteroalkyl", "heterocycloalkyl"* and *"heteroaryl"* moieties are alkyl, cycloalkyl and aryl groups as defined hereinabove, respectively, containing N, O, Si or S as part of their structure.

More specifically, the term *"$C_1$-$C_9$ heteroaryl"* as used herein means an aromatic group having from 1 to 9 carbon atoms and from 1 to 4 heteroatoms. The group may be attached via a nitrogen atom if feasible or via a carbon atom. Exemplary $C_1$-$C_9$ heteroaryl groups include imidazolyl, thiadiazolyl, pyridinyl, pyrimidinyl, furyl, pyrazolyl, isoxazolyl, tetrazolyl and quinolyl. All carbon atoms of the group may optionally be substituted with one or more halogen.

The present compositions are defined herein as being *"substantially free"* of certain compounds, elements, ions or other like components. The term *"substantially free"* is intended to mean that the compound, element, ion or other like component is not deliberately added to the composition and is present, at most, in only trace amounts which will have no (adverse) affect on the desired properties of the coating. An exemplary trace amount is less than 1000 ppm by weight of the composition. The term *"substantially free"* encompasses those embodiments where the specified compound, element, ion, or other like component is completely absent from the composition or is not present in any amount measurable by techniques generally used in the art.

The term *"anhydrous"* is intended to be equate to substantially free of water and thereby also encompasses those embodiments where water is completely absent from the composition or is not present in any amount measurable by techniques generally used in the art.

## DETAILED DESCRIPTION OF THE INVENTION

### a) Elastomer Modified Epoxy Resin

The composition of the present invention necessarily comprises at least one epoxy resin which has been modified with a hydrophobic elastomer, said modified epoxy resin having an epoxide equivalent weight of from 200 to 2500 g/eq., for example from 200 to 1000 g/eq or from 250 to 750 g/eq.

Without intention to limit the present invention, it is preferred that a) said least one elastomer modified epoxy resin constitutes from 10 to 90 wt.%, preferably from 50 to 90 wt.% or from 60 to 90 wt.% of the composition.

Elastomer modification of an epoxy resin (hereinafter denoted E1) may be conducted by any suitable method

known to the skilled artisan but it should generally be performed through a catalyzed addition reaction between the functional groups of the modifier (hereinafter denoted M1) and the oxirane groups of the epoxy resin (E1). Such an addition reaction may be conducted in a suitable solvent and under at least one of following conditions: i) a temperature of from 40°C to 200°C; ii) a reaction duration of from 0.5 to 5 hours; and, iii) catalysis. Exemplary catalysts include: tertiary amine catalysts, such as tributylamine; quaternary ammonium salts, such as tetrabutylammonium chloride; tertiary phosphates, such as triphenylphosphate; quaternary phosphonium salts, such as ethyltriphenyl phosphonium iodide (ETPPI); metal salts, such as AMC-2 (a chromium octoate salt); and, combinations of these catalysts where staged addition reactions are effected.

The epoxy resin (E1) to be modified has a 1,2-epoxide equivalency of greater than one and preferably of at least 2. The epoxy resin (E1) may be linear or branched, saturated or unsaturated, aliphatic, cycloaliphatic, aromatic or heterocyclic. And as examples of epoxy resins (E1), there may be mentioned: polyglycidyl ethers of polyhydric compounds; brominated epoxies; epoxy novolacs or similar polyhydroxyphenol resins; polyglycidyl ethers of glycols or polyglycols; and, polyglycidyl esters of polycarboxylic acids.

A preference may be acknowledged for the use of a polyglycidyl ether of a polyhydric phenol as said epoxy resin (E1). For instance, said epoxy resin (E1) may be selected from the group consisting of bisphenol A diglycidylethers and bisphenol F diglycidyl ethers.

The functionalized, hydrophobic modifier (M1) is functionalized - either terminally or non-terminally - with a group which is reactive to the oxirane group of the epoxy resin (E1). Suitable functional groups include but are not limited to: carboxyl; amino; hydroxyl; epoxy; mercaptan; anhydride; and, isocyanate. In addition, the modifier (M1) may be a functionalized homo-polymer or a functionalized random, block or star co-polymer.

In an embodiment, the functionalized, hydrophobic modifier (M1) used to modify the epoxy resin (E1) is a functionally-terminated diene-containing polymer having the general formula:

Y-B-Y

wherein:

B is a polymer backbone polymerized from monomers selected from: $C_4$-$C_{10}$ dienes; $C_4$-$C_{10}$ dienes and at least one vinyl aromatic monomer, such as styrene, $C_1$-$C_6$ alkyl-substituted styrene, or halogen-substituted styrene; $C_4$-$C_{10}$ dienes and at least one vinyl nitrile monomer, such as acrylonitrile or methacrylonitrile; $C_4$-$C_{10}$ dienes, at least one vinyl nitrile monomer and at least one vinyl aromatic monomer; or, $C_4$-$C_{10}$ dienes, at least one vinyl nitrile monomer and an acrylate of the formula $CH_2$=CR-COOR$^1$ wherein R and R' are independently of one another selected from hydrogen or $C_1$-$C_{10}$ alkyl groups; and,

Y can be any functional group that can react with an oxirane group, of which suitable examples include carboxy, amino, hydroxyl, epoxy, mercaptan, anhydride and isocyanate groups.

As the reactant modifier (M1), the functionally-terminated diene-containing polymer should typically be characterized by a functionality of from 1.1 to 2.5, for example from 1.5 to 2.5 or from 1.6 to 2.4. That aside, it is not precluded that the backbone (B) of the polymer be partially hydrogenated.

By way of non-limiting example, the functionally-terminated diene-containing polymer (M1) may be selected from: carboxyl-terminated polybutadiene; carboxyl-terminated poly(butadiene-acrylonitrile); and, carboxyl-terminated poly(butadiene-acrylonitrile-acrylic acid).

A preference as modifier (M1) for carboxyl-terminated poly(butadiene-acrylonitrile) (CTBN) may be noted and in particular for carboxyl-terminated poly(butadiene-acrylonitrile) (CTBN) constituted by: from 5 to 30 wt.% acrylonitrile; and, from 70 to 95 wt.% butadiene. Independently or additionally to this constitution, the carboxyl-terminated poly(butadiene-acrylonitrile) (CTBN) should have a number average molecular weight (Mn) of from 1000 to 50000 g/mol, for example from 2000 to 10000 g/mol. Further, the carboxyl-terminated poly(butadiene-acrylonitrile) is not precluded from including other functional groups - such as amino, phenolic, hydroxyl, epoxy, mercaptan or anhydride groups - pendent on the chain, in addition to the terminal carboxyl groups.

Aside from functionally-terminated diene-containing polymers, the use of diene-containing polymers functionalized non-terminally along the chain skeleton may be useful in some embodiments. Such functionalized polymers (M1) might include, by way of example: carboxylated polybutadiene; carboxylated poly(butadienestyrene); mid-block carboxylated poly(styrene-ethylene/butadiene-styrene); amidated poly(butadiene-styrene); mercapto-polybutadiene; epoxidized polybutadiene; and, epoxidized poly(butadiene-styrene).

In a further embodiment of the present invention, the composition is characterized in that said at least one elastomer functionalized epoxy resin either comprises or consists of at least one urethane modified epoxy resin. In this embodiment, the functionalized, hydrophobic modifier (M1) which modifies the epoxy resin (E1) is an isocyanate group-terminated, urethane pre-polymer obtainable by reacting a polyisocyanate compound (I) and a polyhydroxyl (P)

compound. Without intention to limit this embodiment, the urethane pre-polymer (M1) should be characterized by: i) an NCO content of from 5 to 30%, preferably from 10 to 25% by weight, based on the prepolymer; and, ii) a functionality of 1.1 to 2.5. These characterizing properties may be found in known commercially available pre-polymers. Alternatively, components (I) and (P) may be reacted in a ratio and under conditions such that these properties of the resultant pre-polymer are achieved.

The polyisocyanates (I) used in preparing the pre-polymer (M1) include any aliphatic, cycloaliphatic, arylaliphatic, heterocyclic or aromatic polyisocyanate, or mixture thereof, having an average isocyanate functionality of at least 2.0 and an equivalent weight of at least 80. The isocyanate functionality of the polyisocyanate (I) will more generally be from 2.2 to 4.0, for example 2.3 to 3.5. Whilst functionalities greater than 4.0 may be used, their use can cause excessive crosslinking. The equivalent weight of the polyisocyanate is typically from 100 to 300, preferably from 1 10 to 250, and more preferably from 120 to 200.

The polyisocyanates, where required, may have been biuretized and / or isocyanurated by generally known methods, such as described in UK Patent No. 889,050.

Examples of suitable polyisocyanates (I) include but are not limited to: ethylene diisocyanate; 1,4-tetramethylene diisocyanate; hexamethylene diisocyanate (HDI); biuret or trimers of HDI; 1,12-dodecane diisocyanate, cyclobutane-1 ,3-diisocyanate cyclohexane-1,3- and 1,4-diisocyanate and mixtures of these isomers; 1-isocyanato- 3,3,5-trimethyl-5-isocyanato methyl cyclohexane; 2,4- and 2,6-hexahydrotolylene diisocyanate and mixtures of these isomers,; hexahydrol, 3- and/or 1,4-phenylene diisocyanate; perhydro-2,5'- and/or 4,4'-diphenyl methane diisocyanate; 1,3- and 1,4-phenylene diisocyanate; 2,4- and 2,6-tolylene diisocyanate and mixtures of these isomers; diphenyl methane-2,4'- and/or 4,4'-diisocyanate (MDI); naphthylene-1,5-diisocyanate; triphenyl methane-4,4',4'-tri-isocyanate; and, polyphenyl polymethylene polyisocyanates of the type obtained by condensing aniline with formaldehyde, followed by phosgenation such as described in UK Patent Nos. 874,430 and 848,671. It is noted that di- and / or polyisocyanates comprising ester, urea, allophanate, carbodiimide, uretdione and / or urethane groups may also be used in the process according to the invention.

The polyhydroxyl compound (P) used to derive the urethane pre-polymer (M1) should conventionally have a number average molecular weight (Mn) of from 400 to 10000 g/mol. The hydroxyl number of the polyhydroxy compound (P) should conventionally be from 20 to 850 mg KOH/g and preferably from 25 to 500 mg KOH/g. Further, it is desirable that the polyhydroxy compound (P) be selected from divalent or polyvalent: polyether polyols; polyester polyols; poly(ether-ester) polyols; poly(alkylene carbonate) polyols; hydroxyl-containing polythioethers; polymer polyols; and, mixtures thereof.

Whilst diols and triols of low molecular weights, for instance from 60 to 400 g/mol. or from 60 to 300 g/mol., may be reactive towards isocyanates (I), these polyols are typically only used as starter molecules, chain extenders and / or crosslinking agents in a reaction mixture which contains the one or more active hydrogen compounds (P). In this regard, mention may be made: aliphatic, cycloaliphatic and/or araliphatic diols having from 2 to 14 and preferably from 4 to 10 carbon atoms, such as ethylene glycol, 1,3- propanediol, 1,4-butanediol, 1,6-hexanediol, 1,10-decanediol, o-, m- and p-dihydroxycyclohexane; diethylene glycol; dipropylene glycol; bis(2- hydroxyethyl)hydroquinone; and, triols, such as 1,2,4-, and 1,3,5- trihydroxycyclohexane, glycerol and trimethylolpropane.

Polyether polyols are well-known in the art and include polyoxyethylene, polyoxypropylene, polyoxybutylene and polytetramethylene ether diols and triols. The polyether polyols may generally have weight average molecular weights (Mw) of from 400 to 10000 g/mol, for example from 1000 to 7000 g/mol, and be prepared by polymerizing alkylene oxides in the presence of an active hydrogen-containing initiator compound, as described in US Patent Nos. 4,269,9945, 4,218,543 and 4,374,210 for instance. The alkylene oxide monomers are typically selected from the group consisting of: ethylene oxide; propylene oxide; butylene oxides; styrene oxide; epichlorohydrin; epibromohydrin; and, mixtures thereof. The active hydrogen initiators are in turn typically selected from the group consisting of: water; ethylene glycol; propylene glycol; butanediol; hexanediol; glycerin; trimethylol propane; pentaerythritol; hexanetriol; sorbitol; sucrose; hydroquinone; resorcinol; catechol; bisphenols; novolac resins; phosphoric acid; amines; and mixtures thereof.

As is known in the art, polyester polyols may be prepared by reacting a polycarboxylic acid or anhydride thereof with a polyhydric alcohol. Examples of suitable polycarboxylic acids include succinic acid, adipic acid, suberic acid, azelaic acid, sebacic acid, phthalic acid, isophthalic acid, maleic acid, trimellitic acid, phthalic acid anhydride, tetrahydrophthalic acid anhydride, hexahydrophthalic acid anhydride, tetrachlorophthalic acid anhydride, endomethylene tetrahydrophthalic acid anhydride, maleic acid anhydride, glutaric acid anhydride, fumaric acid, and mixtures thereof. Examples of polyhydric alcohols which are useful in preparing polyester polyols include ethylene glycols, propane diols, butane diols, 1,6-hexanediol, 1,8-octanediol, neopentylglycol, glycerol, trimethylol propane, pentaerythritol, quinitol, mannitol, sorbitol, methyl glycoside, diethylene glycol, triethylene glycol, tetraethylene glycol, polyethylene glycols, polypropylene glycols, and mixtures thereof. As regards the present invention, useful polyester polyols will typically have weight average molecular weights (Mw) of from 1000 to 10000 g/mol.

In an embodiment of the present invention, the reactant polyhydroxyl compound(s) (P) have an average functionality of at least 1.5, preferably at least 1.8 and more preferably at least 2.0, but no greater than 4.0, preferably no greater than about 3.5 and more preferably no greater than 3.0. Independently or additionally, the equivalent weight of

the reactant polyhydroxyl compound(s) (P) is at least 200 g/eq., preferably at least 500 g/eq. and more preferably at least 1,000 g/eq. but no greater than 3500 g/eq., preferably no greater than 3000 g/eq. and more preferably no greater than 2500 g/eq.

Starting from components (P) and (I) as defined above, the polyurethane pre-polymer (M1) may be prepared under anhydrous conditions by any suitable method, such as bulk polymerization and solution polymerization. The polyhydroxyl compound(s) (P) are present therein an amount sufficient to react with most of the isocyanate groups but leaving enough isocyanate groups to correspond with the desired free isocyanate content of the urethane pre-polymer (M1). And in that embodiment where the polyhydroxyl compound(s) (P) comprise a mixture of diols and triols, the proportion of diol to triol must be chosen to achieve the desired isocyanate functionality of the urethane prepolymer (M1).

In a further and a preferred embodiment of the present invention, the composition is characterized in that a) said at least one elastomer functionalized epoxy resin comprises or consists of at least one dimer acid-modified epoxy resin. The hydrophobic, dimer acid modifier (M1) may be cyclic or non-cyclic but will conventionally be a C36 to C44 aliphatic diacid which may be prepared by the oxidative coupling of C18 to C22 unsaturated monoacids. Dimer acids obtained from the oxidative coupling of oleic acid, linoleic acid or talloil fatty acid may be mentioned as exemplary dimer acid modifiers (M1).

According to an interesting embodiment of the present disclosure, part a) of the composition comprises, based on the weight of the composition:

from 60 to 80 wt.% of ai) at least one dimer acid-modified epoxy resin; and,
from 0 to 10 wt.% of aii) at least one elastomer modified resin selected from the group consisting of carboxyl-terminated poly(butadiene-acrylonitrile) (CTBN) modified epoxy resins and urethane modified epoxy resins,
wherein each modified resin of part a) is characterized by an epoxide equivalent weight of from 200 to 1000 g/eq, preferably from 250 to 750 g/eq.

Having regard to the preferred embodiments discussed herein above, commercial examples of suitable elastomer modified epoxy resins include: Struktol(R) Polydis 3614, Polycavit 3632 and Polycavit 3530, available from Schill and Seilacher; Hypox(R) resins, including Hypox DA 323, available from CVC Thermosets; EPON 58005 and EPON 58034 available from Miller-Stephenson; JER871 and JER872, available from Mitsubishi Chemical Corporation; B-Tough A1, A2 and A3 available from available from Croda Coatings and Polymers; YD-171 and YD-172, available from Nippon Steel Chemical Co., Ltd.; and, EPU-6, EPU-7N, EPU-11F, EPU-15F, EPU-1395, EPU-738, EPU-17, EPU-17T-6 and EPU-80 available from Adeka Corporation.

b) **Further Epoxy Resin**

The composition comprises from 2 to 25 wt.% or preferably from 3 to 20 wt.% or more preferably 5 to 10 wt.% of a further epoxy resin which is distinct from the modified resin of part a), based on the weight of said composition.

Epoxy resins as used herein for part b) may include mono-functional epoxy resins, multi- or poly-functional epoxy resins, and combinations thereof. The epoxy resins may be pure compounds but equally may be mixtures epoxy functional compounds, including mixtures of compounds having different numbers of epoxy groups per molecule. An epoxy resin may be saturated or unsaturated, aliphatic, cycloaliphatic, aromatic or heterocyclic and may be substituted. Further, the epoxy resin may also be monomeric or polymeric.

Without intention to limit the present invention, illustrative monoepoxide compounds include: alkylene oxides; epoxy-substituted cycloaliphatic hydrocarbons, such as cyclohexene oxide, vinylcyclohexene monoxide, (+)-cis-limonene oxide, (+)-cis,trans-limonene oxide, (-)-cis,trans-limonene oxide, cyclooctene oxide, cyclododecene oxide and $\alpha$-pinene oxide; epoxy-substituted aromatic hydrocarbons; monoepoxy substituted alkyl ethers of monohydric alcohols or phenols, such as the glycidyl ethers of aliphatic, cycloaliphatic and aromatic alcohols; monoepoxy-substituted alkyl esters of monocarboxylic acids, such as glycidyl esters of aliphatic, cycloaliphatic and aromatic monocarboxylic acids; monoepoxy-substituted alkyl esters of polycarboxylic acids wherein the other carboxy group(s) are esterified with alkanols; alkyl and alkenyl esters of epoxy-substituted monocarboxylic acids; epoxyalkyl ethers of polyhydric alcohols wherein the other OH group(s) are esterified or etherified with carboxylic acids or alcohols; and, monoesters of polyhydric alcohols and epoxy monocarboxylic acids, wherein the other OH group(s) are esterified or etherified with carboxylic acids or alcohols.

By way of example, the following glycidyl ethers might be mentioned as being particularly suitable monoepoxide compounds for use herein: methyl glycidyl ether; ethyl glycidyl ether; propyl glycidyl ether; butyl glycidyl ether; pentyl glycidyl ether; hexyl glycidyl ether; cyclohexyl glycidyl ether; octyl glycidyl ether; 2-ethylhexyl glycidyl ether; allyl glycidyl ether; benzyl glycidyl ether; phenyl glycidyl ether; 4-tert-butylphenyl glycidyl ether; 1-naphthyl glycidyl ether; 2-naphthyl glycidyl ether; 2-chlorophenyl glycidyl ether; 4-chlorophenyl glycidyl ether; 4-bromophenyl glycidyl ether; 2,4,6-trichlorophenyl glycidyl ether; 2,4,6-tribromophenyl glycidyl ether; pentafluorophenyl glycidyl ether; o-cresyl glycidyl ether; m-cresyl glycidyl ether; and, p-cresyl glycidyl ether.

In an embodiment, the monoepoxide compound conforms to Formula (EI) herein below:

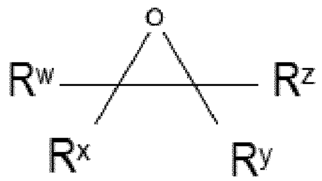

(EI)

wherein: $R^w$, $R^x$, $R^y$ and $R^z$ may be the same or different and are independently selected from hydrogen, a halogen atom, a $C_1$-$C_8$ alkyl group, a $C_3$ to $C_{10}$ cycloalkyl group, a $C_2$-$C_{12}$ alkenyl, a $C_6$-$C_{18}$ aryl group or a $C_7$-$C_{18}$ aralkyl group, with the proviso that at least one of $R^y$ and $R^z$ is not hydrogen.

It is preferred that $R^w$, $R^x$ and $R^y$ are hydrogen and $R^z$ is either a phenyl group or a $C_1$-$C_8$ alkyl group and, more preferably, a $C_1$-$C_4$ alkyl group.

Having regard to this embodiment, exemplary monoepoxides include: ethylene oxide; 1,2-propylene oxide *(propylene oxide);* 1,2-butylene oxide; cis-2,3-epoxybutane; trans-2,3-epoxybutane; 1,2-epoxypentane; 1,2-epoxyhexane; 1,2-heptylene oxide; decene oxide; butadiene oxide; isoprene oxide; and, styrene oxide.

In the present invention, reference is made to using at least one monoepoxide compound selected from the group consisting of: ethylene oxide; propylene oxide; cyclohexene oxide; (+)-cis-limonene oxide; (+)-cis,trans-limonene oxide; (-)-cis,trans-limonene oxide; cyclooctene oxide; and, cyclododecene oxide.

Again, without intention to limit the present invention, suitable polyepoxide compounds may be liquid, semi-solid, solid or in solution in solvent. Further, such polyepoxide compounds should have an epoxide equivalent weight of from 100 to 700 g/eq, for example from 170 to 320 g/eq.

As examples of types or groups of polyepoxide compounds which may be polymerized in present invention, mention may be made of: glycidyl ethers of polyhydric alcohols and polyhydric phenols; glycidyl esters of polycarboxylic acids; and, epoxidized polyethylenically unsaturated hydrocarbons.

Suitable diglycidyl ether compounds may be aromatic, aliphatic or cycloaliphatic in nature and, as such, can be derivable from dihydric phenols and dihydric alcohols. And useful classes of such diglycidyl ethers are: diglycidyl ethers of aliphatic and cycloaliphatic diols, such as 1,2-ethanediol, 1,4-butanediol, 1,6-hexanediol, 1,8-octanediol, 1,12-dodecanediol, cyclopentane diol and cyclohexane diol; bisphenol A based diglycidylethers; bisphenol F diglycidyl ethers; diglycidyl o-phthalate, diglycidyl isophthalate and diglycidyl terephthalate; polyalkyleneglycol based diglycidyl ethers, in particular polypropyleneglycol diglycidyl ethers; and, polycarbonatediol based glycidyl ethers. Other suitable diepoxides which might also be mentioned include: diepoxides of double unsaturated fatty acid $C_1$-$C_{18}$ alkyl esters; butadiene diepoxide; polybutadiene diglycidyl ether; vinylcyclohexene diepoxide; and, limonene diepoxide.

Further illustrative polyepoxide compounds include but are not limited to: glycerol polyglycidyl ether; trimethylolpropane polyglycidyl ether; pentaerythritol polyglycidyl ether; diglycerol polyglycidyl ether; polyglycerol polyglycidyl ether; and, sorbitol polyglycidyl ether.

And examples of highly preferred polyepoxide compounds include: bisphenol-A epoxy resins, such as DER™ 331, DER™ 330, DER™ 337 and DER™ 383; bisphenol-F epoxy resins, such as DER™ 354; bisphenol-A/F epoxy resin blends, such as DER™ 353; aliphatic glycidyl ethers, such as DER™ 736; polypropylene glycol diglycidyl ethers, such as DER™ 732; solid bisphenol-A epoxy resins, such as DER™ 661 and DER™ 664 UE; solutions of bisphenol-A solid epoxy resins, such as DER™ 671-X75; epoxy novolac resins, such as DEN™ 438; brominated epoxy resins such as DER™ 542; castor oil triglycidyl ether, such as ERISYS™ GE-35H; polyglycerol-3-polyglycidyl ether, such as ERISYS™ GE-38; and, sorbitol glycidyl ether, such as ERISYS™ GE-60.

In preferred embodiments, epoxy resins b) are selected from aromatic polyglycidyl ether compounds, preferably bisphenol based epoxy resin, most preferably bisphenol-A based epoxy resin. The additional epoxy resin b) can be single epoxy resin or a mixture of different epoxy resins, preferably a mixture of at least to different epoxy resins. These epoxy resins can differ for example in the chemical structure, like bisphenol-A and bisphenol-F based epoxy resins, or in the equivalent weight, like a resin with an epoxide equivalent weight of 200 g/eq and a resin with an epoxide equivalent weight of 500 g/eq, preferably the resins differ in epoxide equivalent weight. In a preferred embodiment, the additional epoxy resin b) has a combined epoxide equivalent weight of from 150 to 600 g/eq, preferably from 150 to 500 g/eq, more preferably from 200 to 320 g/eq, most preferably from 220 to 270 g/eq. The combined epoxide equivalent weight can be calculated by taking all contained epoxy resins b) into account and determine the overall epoxide equivalent weight. If only one epoxy resin b) is present than this already represents the epoxide equivalent weight. In the event of a mixture of epoxy resins the combined epoxide equivalent weight is determined by adding up the epoxy equivalents of each epoxy resin based on its respective contained amount and matching this with the total amount of the epoxy resins b).

The above aside, part b) of the composition can in certain embodiments comprise glycidoxy alkyl alkoxy silanes having the formula:

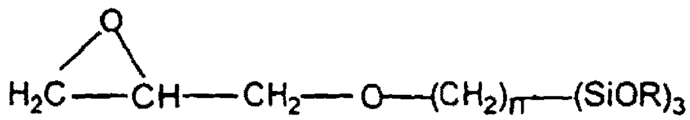

wherein:

each R is independently selected from methyl or ethyl; and,
n is from 1-10.

Exemplary silanes include but are not limited to: γ-glycidoxy propyl trimethoxy silane, γ-glycidoxy ethyl trimethoxy silane, γ-glycidoxy methyl trimethoxy silane, γ-glycidoxy methyl triethoxy silane, γ-glycidoxy ethyl triethoxy silane, γ-glycidoxy propyl triethoxy silane; and, 8-glycidooxyoctyl trimethoxysilane. When present, the epoxide functional silanes should constitute less than 10 wt.%, preferably less than 5 wt.%, based on the total weight of the epoxide compounds.

The present disclosure also does not preclude the curable compositions from further comprising one or more cyclic monomers selected from the group consisting of: oxetanes; cyclic carbonates; cyclic anhydrides; and, lactones. The disclosures of the following citations may be instructive in disclosing suitable cyclic carbonate functional compounds: US Patent No. 3,535,342; US Patent No. 4,835,289; US Patent No. 4,892,954; UK Patent No. GB-A-1,485,925; and, EP-A-0 119 840. However, such cyclic co-monomers should constitute less than 20 wt.%, preferably less than 10 wt.% or less than 5 wt.%, based on the total weight of the epoxide compounds.

**c) Curative for the Epoxide Compounds**

As noted above, the composition comprises at least one compound which provides at least two amine hydrogens reactive toward epoxide groups. The composition may, in important embodiments, comprise at least one polyamine having at least two amine hydrogens reactive toward epoxide groups. However, it is not precluded that part c) of the composition comprises or consists of a latent amine which yields said reactive amine hydrogens upon exposure to a triggering condition.

When formulating the curable composition, the composition is characterized by a molar ratio of epoxide groups to epoxide-reactive groups ($E^R$) of 1.4:1 < $E^R$ ≤ 2:1, for example from 1.5:1 to 2.0:1. The term epoxide reactive groups includes latent reactive groups.

In an alternative expression, which is not intended to be mutually exclusive of that given above, it is preferred that the composition comprises, based on the weight of the composition, from 0.01 to 25 wt.% of c) said at least one compound which provides at least two amine hydrogens reactive toward epoxide groups, Preferably said composition comprises from 0.1 to 15 wt.%, for example from 0.1 to 5 wt.% of c) said at least one compound.

Where part c) comprises or consists of a polyamine at least two amine hydrogens reactive toward epoxide groups, it is preferred that the or each polyamine should contain primary and / or secondary amine groups and have an equivalent weight per primary or secondary amine group of not more than 150 g/eq., more preferably not more than 125 g/eq.

Suitable polyamines, which may be used alone or in combination, include but are not limited to the following:

i) Aliphatic, cycloaliphatic or arylaliphatic primary diamines of which the following examples may be mentioned: 2,2-dimethyl-1,3-propanediamine; 1,3-pentanediamine (DAMP); 1,5-pentanediamine; 1,5-diamino-2-methylpentane (MPMD); 2-butyl-2-ethyl-1,5-pentanediamine (C11-neodiamine); 1,6-hexanediamine (hexamethylenediamine, HMDA); 2,5-dimethyl-1,6-hexanediamine; 2,2,4- and / or 2,4,4-trimethylhexamethylenediamine; 1,7-heptanediamine; 1,8-octanediamine; 1,9-nonanediamine; 1,10-decanediamine; 1,11-undecanediamine; 1,12-dodecanediamine; 1,2-, 1,3- and 1,4-diaminocyclohexane; bis(4-aminocyclohexyl)methane; bis(4-amino-3-methylcyclohexyl) methane; bis(4-amino-3-ethylcyclohexyl)methane; bis(4-amino-3,5-dimethylcyclohexyl)methane; bis(4-amino-3-ethyl-5-methylcyclohexyl)methane; 1-amino-3-aminomethyl-3,5,5-trimethylcyclohexane (isophorone diamine, IPDA); 2- and / or 4-methyl-1,3-diaminocyclohexane; 1,3-bis(aminomethyl)-cyclohexane; 1,4-bis(aminomethyl) cyclohexane; 2,5(2,6)-bis(aminomethyl)-bicyclo[2.2.1]heptane (norborane diamine, NBDA); 3(4),8(9)-bis(aminomethyl)tricyclo[5.2.1.0$^{2,6}$]-decane (TCD-diamine); 1,4-diamino-2,2,6-trimethylcyclohexane (TMCDA); 1,8-menthanediamine; 3,9-bis(3-aminopropyl)-2,4,8,10-tetraoxaspiro[5.5]undecane; and, 1,3-bis(aminomethyl)benzene (MXDA).

ii) Tertiary amine group-containing polyamines with two or three primary aliphatic amine groups of which the following

specific examples may be mentioned: N,N'-bis(aminopropyl)-piperazine; N,N-bis(3-aminopropyl)methylamine; N,N-bis(3-aminopropyl)ethylamine; N,N-bis(3-aminopropyl)propylamine; N,N-bis(3-aminopropyl)cyclohexylamine; N,N-bis(3-aminopropyl)-2-ethyl-hexylamine; tris(2-aminoethyl)amine; tris(2-aminopropyl)amine; tris(3-aminopropyl) amine; and, the products from the double cyanoethylation and subsequent reduction of fatty amines derived from natural fatty acids, such as N,N-bis(3-aminopropyl)dodecylamine and N,N-bis(3-aminopropyl)tallow alkylamine, commercially available as Triameen® Y12D and Triameen® YT (from Akzo Nobel).

iii) Ether group-containing aliphatic primary polyamines of which the following specific examples may be mentioned: bis(2-aminoethyl)ether; 3,6-dioxaoctane-1,8-diamine; 4,7-dioxadecane-1,10-diamine; 4,7-dioxadecane-2,9-diamine; 4,9-dioxadodecane-1,12-diamine; 5,8-dioxadodecane-3,10-diamine; 4,7,10-trioxatridecane-1,13-diamine and higher oligomers of these diamines; bis(3-aminopropyl)polytetrahydrofuranes and other polytetrahydrofuran diamines; cycloaliphatic ether group-containing diamines obtained from the propoxylation and subsequent amination of 1,4-dimethylolcyclohexane, such as that material commercially available as Jeffamine® RFD-270 (from Huntsman); polyoxyalkylenedi- or -triamines obtainable as products from the amination of polyoxyalkylenedi- and -triols and which are commercially available under the name of Jeffamine® (from Huntsman), under the name of polyetheramine (from BASF) or under the name of PC Amines® (from Nitroil). A particular preference may be noted for the use of Jeffamine® D-230, Jeffamine® D-400, Jeffamine® D-600, Jeffamine® D-2000, Jeffamine® D-4000, Jeffamine® T-403, Jeffamine® T-3000, Jeffamine® T-5000, Jeffamine® EDR-104, Jeffamine® EDR-148 and Jeffamine® EDR-176, as well as corresponding amines from BASF or Nitroil.

iv) Primary diamines with secondary amine groups of which the following examples may be mentioned: 3-(2-aminoethyl)aminopropylamine, bis(hexamethylene)triamine (BHMT); diethylenetriamine (DETA); triethylenetetramine (TETA); tetraethylenepentamine (TEPA); pentaethylenehexamine (PEHA); higher homologs of linear polyethyleneamines, such as polyethylene polyamines with 5 to 7 ethyleneamine units (so-called "higher ethylenepolyamine," HEPA); products from the multiple cyanoethylation or cyanobutylation and subsequent hydrogenation of primary di- and polyamines with at least two primary amine groups, such as dipropylenetriamine (DPTA), N-(2-aminoethyl)-1,3-propanediamine (N3-amine), N,N'-bis(3-aminopropyl)ethylenediamine (N4-amine), N,N'-bis(3-aminopropyl)-1,4-diaminobutane, N5-(3-aminopropyl)-2-methyl-1,5-pentanediamine, N3-(3-aminopentyl)-1,3-pentanediamine, N5-(3-amino-1-ethylpropyl)-2-methyl-1,5-pentanediamine or N,N'-bis(3-amino-1-ethylpropyl)-2-methyl-1,5-pentanediamine.

v) Polyamines with one primary and at least one secondary amino group of which the following examples may be mentioned: N-butyl-1,2-ethanediamine; N-hexyl-1,2-ethanediamine; N-(2-ethylhexyl)-1,2-ethanediamine; N-cyclohexyl-1,2-ethanediamine; 4-aminomethyl-piperidine; N-(2-aminoethyl)piperazine; N-methyl-1,3-propanediamine; N-butyl-1,3-propanediamine; N-(2-ethylhexyl)-1,3-propanediamine; N-cyclohexyl-1,3-propanediamine; 3-methylamino-1-pentylamine; 3-ethylamino-1-pentylamine; 3-cyclohexylamino-1-pentylamine; fatty diamines such as N-cocoalkyl-1,3-propanediamine; products from the Michael-type addition reaction of primary aliphatic diamines with acrylonitrile, maleic or fumaric acid diesters, citraconic acid diesters, acrylic and methacrylic acid esters, acrylic and methacrylic acid amides and itaconic acid diesters, reacted in a 1:1 molar ratio; products from the partial reductive alkylation of primary polyamines with aldehydes or ketones, especially N-monoalkylation products of the previously mentioned polyamines with two primary amine groups and in particular of 1,6-hexanediamine, 1,5-diamino-2-methylpentane, 1,3-bis(aminomethyl)cyclohexane, 1,4-bis(aminomethyl)cyclohexane, 1,3-bis(aminomethyl)benzene, BHMT, DETA, TETA, TEPA, DPTA, N3-amine and N4-amine, wherein preferred alkyl groups are benzyl, isobutyl, hexyl and 2-ethylhexyl; and, partially styrenated polyamines such as those commercially available as Gaskamine® 240 (from Mitsubishi Gas Chemical).

vi) Secondary diamines and, in particular, N,N'-dialkylation products of the previously mentioned polyamines with two primary amine groups, especially N,N'-dialkylation products of 1,6-hexanediamine, 1,5-diamino-2-methylpentane, 1,3-bis(aminomethyl)cyclohexane, 1,4-bis(aminomethyl)-cyclohexane, 1,3-bis(aminomethyl)benzene, BHMT, DETA, TETA, TEPA, DPTA, N3-amine or N4-amine, wherein preferred alkyl groups are 2-phenylethyl, benzyl, isobutyl, hexyl and 2-ethylhexyl.

vii) Aromatic polyamines of which mention may be made of: m- and p-phenylenediamine; 4,4'-, 2,4' and 2,2'-diaminodiphenylmethane; 3,3'-dichloro-4,4'-diaminodiphenylmethane (MOCA); 2,4- and 2,6-tolylenediamine; mixtures of 3,5-dimethylthio-2,4- and -2,6-tolylenediamine (available as Ethacure® 300 from Albermarle); mixtures of 3,5-diethyl-2,4- and -2,6-tolylene diamine (DETDA); 3,3',5,5'-tetraethyl-4,4'-diaminodiphenylmethane (M-DEA); 3,3',5,5'-tetraethyl-2,2'-dichloro-4,4'-diaminodiphenylmethane (M-CDEA); 3,3'-diisopropyl-5,5'-dimethyl-4,4'-diaminodiphenylmethane (M-MIPA); 3,3',5,5'-tetraisopropyl-4,4'-diaminodiphenylmethane (M-DIPA); 4,4'-diamino diphenyl-sulfone (DDS); 4-amino-N-(4-aminophenyl)benzenesulfonamide; 5,5'-methylenedianthranilic acid; dimethyl-(5,5'-methylenedianthranilate); 1,3-propylene-bis(4-aminobenzoate); 1,4-butylene-bis(4-aminobenzoate); polytetramethylene oxide-bis(4-aminobenzoate) (available as Versalink® from Air Products); 1,2-bis(2-aminophenylthio)ethane, 2-methylpropyl-(4-chloro-3,5-diaminobenzoate); and, tert.butyl-(4-chloro-3,5-diaminobenzoate).

viii) Polyamidoamines of which indicative members include the reaction products of monohydric or polyhydric

carboxylic acids or the esters or anhydrides thereof, - in particular dimer fatty acids - and an aliphatic, cycloaliphatic or aromatic polyamine, for instance polyalkyleneamines such as DETA or TETA. Commercially available polyamidoamines include: Versamid® 100, 125, 140 and 150 (from Cognis); Aradur® 223, 250 and 848 (from Huntsman); Euretek® 3607 and 530 (from Huntsman); and, Beckopox® EH 651, EH 654, EH 655, EH 661 and EH 663 (from Cytec).

In addition to the above, it is envisaged that part c) of the composition may comprise or consist of dicyandiamide. When employed, it is preferred that said dicyandiamide is in finely divided form: an average particle size (d50) of from 0.5 to 100 μm, for example from 1 to 50 μm or from 2 to 20 μm might be noted as desirable. Said particle size refers to the diameter or largest dimension of a particle in a distribution of particles and is measurable via dynamic light scattering.

Further exemplary latent curatives which used in or as part c) of the composition include but are not limited: ketimines obtainable by the reaction of aliphatic polyamines and ketones; polyethyleneimines, in particular polyethyleneimines having a weight average molecular weight (Mw) from 700 to 1,000,000; imidazole derivatives such as 2-heptadeoylimidazole, 2-phenyl-4,5-dihydroxymethylimidazole, 2-phenyl-4-methyl-5-hydroxymethylimidazole, 2-phenyl-4-benzyl-5-hydroxymethyl-imidazole; 2,4-diamino-8-2-methylimidazolyl-(1)-ethyl-5-triazine; addition products of triazine with isocyanuric acid; hydrazides such as succinohydrazide, adipohydrazide, isophtholohydrazide o-oxybenzohydrazide and salicylohydrazide.

**d) Accelerator**

The composition of the present invention comprises at least one accelerator, which accelerator is a substance that promotes the reaction between the epoxide groups and the epoxide-reactive groups of the curative, in particular the reaction between the amine and the epoxide groups. The composition may preferably comprise, based on the weight of the composition, from 0.01 to 5 wt.% of d) said at least one accelerator. In certain embodiments, the composition may comprise from 0.01 to 2 wt.%, for example from 0.01 to 1 wt.% of d) said at least one accelerator.

Without intention to the limit the accelerators used in the present invention, mention may be made of the following suitable accelerators: i) acids or compounds hydrolyzable to acids, in particular a) organic carboxylic acids, such as acetic acid, benzoic acid, salicylic acid, 2-nitrobenzoic acid and lactic acid; b) organic sulfonic acids, such as methanesulfonic acid, p-toluenesulfonic acid and 4-dodecylbenzenesulfonic acid; c) sulfonic acid esters; d) inorganic acids, such as phosphoric acid; e) Lewis acid compounds, such as $BF_3$ amine complexes, $SbF_6$ sulfonium compounds, bis-arene iron complexes; f) Bronsted acid compounds, such as pentafluoroantimonic acid complexes; and, e) mixtures of the aforementioned acids and acid esters; ii) phenols, in particular bisphenols; ii) tertiary amines, such as 2-piperazin-1-ylethanamine, 1,4-diazabicyclo[2.2.2]octane, benzyldimethylamine, α-methylbenzyl dimethylamine, triethanolamine, dimethylamino propylamine and salts of such tertiary amines; iv) imidazoles, including imidazole, 1-methylimidazole, 2-methylimidazole, 2-ethylimidazole, 2-ethyl-4-methylimidazole, 1-vinylimidazole and N-(3-aminopropyl)imidazole; v) quaternary ammonium salts, such as benzyltrimethyl ammonium chloride; vi) amidines, such as 1,8-diazabicyclo[5.4.0] undec-7-ene; vii) urea derivatives; viii) thiourea derivatives; ix) guanidines, such as 1,1,3,3-tetramethylguanidine; x) phenol resins; and, xi) phosphites, such as di- and triphenylphosphites.

The skilled artisan will recognize that the selection of an accelerator is not simply concerned with adding the fastest accelerator. Other factors determinative in the selection of accelerators include: cost; toxicity; solubility; processing effects, such as working time, premature gelation, exothermic degradation, expansion and off-gassing; final properties, such as glass transition temperature ($T_g$), modulus, strength, elongation at break and chemical resistance; regulatory concerns; and, ease of use.

It is preferred in the present disclosure that part d) comprises or consists of at least one accelerator selected from the group consisting of: tertiary amines; urea derivatives; thiourea derivatives; and, amidines. More particularly, said at least one accelerator should comprise or consist of at least one compound in accordance with Formula (I) or Formula (II):

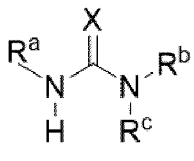

(I)

or,

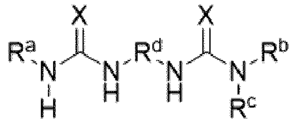

(II)

wherein:

X is O or S;

$R^a$, $R^b$ and $R^c$ are independently selected from $C_1$-$C_{12}$ alkyl, $C_1$-$C_{12}$ hydroxyalkyl, $C_3$-$C_{18}$ cycloalkyl or $C_6$-$C_{18}$ aryl; and,
$R^d$ is $C_6$-$C_{18}$ arylene or $C_7$-$C_{18}$ alkylarylene.

Having regard to Formula (I) and Formula (II), it is preferred that: X is O; $R^a$, $R^b$ and $R^c$ are independently selected from $C_1$-$C_8$ alkyl, $C_1$-$C_8$ hydroxyalkyl, $C_3$-$C_{12}$ cycloalkyl or $C_6$ aryl; and, $R^d$ is $C_6$-$C_{18}$ arylene or $C_7$-$C_{18}$ alkylarylene.

For completeness, exemplary urea accelerators include but are not limited to: phenyl dimethyl urea; N,N'-dimethyl-N,N'-diphenyl-urea; N,N-dimethyl-N'-tolyl urea; N,N-dibutyl-N'-phenyl urea; N,N-dihydroxyethyl-N'-phenyl urea; N,N-dicyclohexyl-N'-isopropyl urea; 1,1'-(4-methyl-1,3-phenylene)bis(3,3-dimethylurea); 3,4-dichlorophenyl dimethyl urea (Diuron); 4-chlorophenyl dimethyl urea (Monuron); and, 4,4'-methylene bis(phenyl dimethyl urea).

Further, exemplary commercially available urea derivatives having utility in the present disclosure include: Omicure U-24, Omicure U-35, Omicure U-410, Omicure U-52, Omicure U-415 and Omicure U-405, available from CVC Corporation; Amicure UR, Amicure UR7/10, Amicure UR200, Amicure UR300, Amicure UR500, Amicure UR2T, Amicure UR41 and Amicure UR-D, available from The Air Product Corporation; and, Dyhard UR200, Dyhard UR300, Dyhard UR500, Dyhard UR700 and Ecure 30, available from Alzchem Corporation.

**Additives and Adjunct Ingredients**

Said compositions obtained in the present invention will typically further comprise adjuvants and additives that can impart improved properties to these compositions. For instance, the adjuvants and additives may impart one or more of: improved elastic properties; improved elastic recovery; longer enabled processing time; faster curing time; and, lower residual tack. Included among such adjuvants and additives are plasticizers, stabilizers including UV stabilizers, antioxidants, tougheners, fillers, reactive diluents, drying agents, adhesion promoters, fungicides, flame retardants, rheological adjuvants, color pigments or color pastes, and/or optionally also, to a small extent, non-reactive diluents.

A *"plasticizer"* for the purposes of this invention is a substance that decreases the viscosity of the composition and thus facilitates its processability. Herein the plasticizer may constitute up to 10 wt.% or up to 5 wt.%, based on the total weight of the composition, and is preferably selected from the group consisting of: polydimethylsiloxanes (PDMS); diurethanes; ethers of monofunctional, linear or branched C4-C16 alcohols, such as Cetiol OE (obtainable from Cognis Deutschland GmbH, Dusseldorf); esters of abietic acid, butyric acid, thiobutyric acid, acetic acid, propionic acid esters and citric acid; esters based on nitrocellulose and polyvinyl acetate; fatty acid esters; dicarboxylic acid esters; esters of OH-group-carrying or epoxidized fatty acids; glycolic acid esters; benzoic acid esters; phosphoric acid esters; sulfonic acid esters; trimellitic acid esters; epoxidized plasticizers; polyether plasticizers, such as end-capped polyethylene or polypropylene glycols; polystyrene; hydrocarbon plasticizers; chlorinated paraffin; and, mixtures thereof. It is noted that, in principle, phthalic acid esters can be used as the plasticizer but these are not preferred due to their toxicological potential. It is preferred that the plasticizer comprises or consists of one or more polydimethylsiloxane (PDMS).

*"Stabilizers"* for purposes of this invention are to be understood as antioxidants, UV stabilizers or hydrolysis stabilizers. Herein stabilizers may constitute *in toto* up to 10 wt.% or up to 5 wt.%, based on the total weight of the composition. Standard commercial examples of stabilizers suitable for use herein include: sterically hindered phenols; thioethers; benzotriazoles; benzophenones; benzoates; cyanoacrylates; acrylates; amines of the hindered amine light stabilizer (HALS) type; phosphorus; sulfur; and, mixtures thereof.

Those compositions of the present invention may optionally contain a toughening rubber in the form of in the form of core-shell particles dispersed in the epoxy resin matrix. The term *"core shell rubber"* or CSR is being employed in accordance with its standard meaning in the art as denoting a rubber particle core formed by a polymer comprising an elastomeric or rubbery polymer as a main ingredient and a shell layer formed by a polymer which is graft polymerized onto the core. The shell layer partially or entirely covers the surface of the rubber particle core in the graft polymerization process. By weight, the core should constitute at least 50 wt.% of the core-shell rubber particle.

The polymeric material of the core should have a glass transition temperature ($T_g$) of no greater than 0°C and preferably a glass transition temperature ($T_g$) of -20°C or lower, more preferably -40°C or lower and even more preferably -60°C or lower. The polymer of the shell is non-elastomeric, thermoplastic or thermoset polymer having a glass transition temperature ($T_g$) of greater than room temperature, preferably greater than 30°C and more preferably greater than 50°C.

Without intention to limit the invention, the core may be comprised of: a diene homopolymer, for example, a homopolymer of butadiene or isoprene; a diene copolymer, for example a copolymer of butadiene or isoprene with one or more ethylenically unsaturated monomers, such as vinyl aromatic monomers, (meth)acrylonitrile or (meth)acrylates; polymers based on (meth)acrylic acid ester monomers, such as polybutylacrylate; and, polysiloxane elastomers such as polydimethylsiloxane and crosslinked polydimethylsiloxane.

Similarly without intention to limit the present invention, the shell may be comprised of a polymer or copolymer of one or more monomers selected from: (meth)acrylates, such as methyl methacrylate; vinyl aromatic monomers, such as styrene; vinyl cyanides, such as acrylonitrile; unsaturated acids and anhydrides, such as acrylic acid; and, (meth)acrylamides. The polymer or copolymer used in the shell may possess acid groups that are cross-linked ionically through metal carboxylate formation, in particular through forming salts of divalent metal cations. The shell polymer or copolymer may also be covalently cross-linked by monomers having two or more double bonds per molecule.

It is preferred that any included core-shell rubber particles have a mean particle size (d50) of from 10nm to 300nm, for example from 50 nm to 200 nm: said particle size refers to the diameter or largest dimension of a particle in a distribution of particles and is measured via dynamic light scattering.

The present application does not preclude the presence of two types of core shell rubber (CSR) particles with different particle sizes in the composition to provide a balance of key properties of the resultant cured product, including shear strength, peel strength and resin fracture toughness. In this embodiment, smaller included particles (1st CSR type) may have a mean particle size of from 10 to 100 nm and larger included particles (2nd CSR type) may have an mean particle size of from 120 nm to 300 nm, for example from 150 to 300 nm. The smaller core shell rubber particles should typically be employed in excess of the larger particles on a weight basis: a weight ratio of smaller CSR particles to larger CSR particles of from 3:1 to 5:1 may be employed for instance.

The core-shell rubber may be selected from commercially available products, examples of which include: Paraloid EXL 2650A, EXL 2655 and EXL2691 A, available from The Dow Chemical Company; the Kane Ace® MX series available from Kaneka Corporation, and in particular MX 120, MX 125, MX 130, MX 136, MX154, MX 551, MX553; and, METABLEN SX-006 available from Mitsubishi Rayon.

The core shell rubber particles should be included in the composition in an amount of from 0 to 20 wt.%, for example from 0 to 15 wt.% or in an amount up to 10 wt.%, based on the total weight of the composition.

As noted, the compositions according to the present invention can additionally contain fillers. Suitable here are, for example, chalk, lime powder, precipitated and/or pyrogenic silica, zeolites, bentonites, magnesium carbonate, diatomite, alumina, clay, talc, titanium oxide, iron oxide, zinc oxide, sand, quartz, flint, mica, glass powder, and other ground mineral substances. Organic fillers can also be used, in particular carbon black, graphite, wood fibers, wood flour, sawdust, cellulose, cotton, pulp, cotton, wood chips, chopped straw, chaff, ground walnut shells, and other chopped fibers. Short fibers such as glass fibers, glass filament, polyacrylonitrile, carbon fibers, Kevlar fibers, or polyethylene fibers can also be added. Aluminum powder is likewise suitable as a filler.

The pyrogenic and/or precipitated silica advantageously have a BET surface area from 10 to 90 $m^2/g$. When they are used, they do not cause any additional increase in the viscosity of the composition according to the present invention, but do contribute to strengthening the cured composition.

It is likewise conceivable to use pyrogenic and/or precipitated silica having a higher BET surface area, advantageously from 100 to 250 $m^2/g$, in particular from 110 to 170 $m^2/g$, as a filler: because of the greater BET surface area, the effect of strengthening the cured composition is achieved with a smaller proportion by weight of silica.

Also suitable as fillers are hollow spheres having a mineral shell or a plastic shell. These can be, for example, hollow glass spheres that are obtainable commercially under the trade names Glass Bubbles®. Plastic-based hollow spheres, such as Expancel® or Dualite®, may be used and are described in EP 0 520 426 B1: they are made up of inorganic or organic substances and each have a diameter of 1 mm or less, preferably 500 μm or less.

Fillers which impart thixotropy to the composition may be preferred for many applications: such fillers are also described as rheological adjuvants, e.g. hydrogenated castor oil, fatty acid amides, or swellable plastics such as PVC. The use of mixed mineral thixotropic adjuvants, such as Garamite 7305 available from BYK Chemie may be mentioned in this context.

The total amount of fillers present in the compositions of the present invention will preferably be from 0 to 30 wt.%, and more preferably from 0 to 20 wt.%, based on the total weight of the composition. The desired viscosity of the curable composition will typically be determinative of the total amount of filler added and it is submitted that in order to be readily extrudable out of a suitable dispensing apparatus - such as a tube - the curable compositions should possess a viscosity of from 100 to 500 Pa.s, preferably from 200 to 500 Pa.s, as determined at 20°C.

It is noted that compounds having metal chelating properties may be used in the compositions of the present invention to help enhance the adhesion of the cured adhesive to a substrate surface. Further, also suitable for use as adhesion promoters are the acetoacetate-functionalized modifying resins sold by King Industries under the trade name K-FLEX XM-B301.

Examples of suitable pigments are titanium dioxide, iron oxides, or carbon black.

In order to enhance shelf life even further, it is often advisable to further stabilize the compositions of the present invention with respect to moisture penetration through using drying agents. A need also occasionally exists to lower the viscosity of an adhesive or sealant composition according to the present invention for specific applications, by using reactive diluent(s). The total amount of reactive diluents present will typically be up to 15 wt.%, and preferably from 1 to 5 wt.%, based on the total weight of the composition.

The presence of solvents and non-reactive diluents in the compositions of the present invention is also not precluded where this can usefully moderate the viscosities thereof. For instance, but for illustration only, the compositions may contain one or more of: xylene; 2-methoxyethanol; dimethoxyethanol; 2-ethoxyethanol; 2-propoxyethanol; 2-isopropoxyethanol; 2-butoxyethanol; 2-phenoxyethanol; 2-benzyloxyethanol; benzyl alcohol; ethylene glycol; ethylene glycol dimethyl ether; ethylene glycol diethyl ether; ethylene glycol dibutyl ether; ethylene glycol diphenyl ether; diethylene glycol; diethylene glycol-monomethyl ether; diethylene glycol-monoethyl ether; diethylene glycol-mono-n-butyl ether; diethylene glycol dimethyl ether; diethylene glycol diethyl ether; diethylene glycoldi-n-butylyl ether; propylene glycol butyl ether; propylene glycol phenyl ether; dipropylene glycol; dipropylene glycol monomethyl ether; dipropylene glycol dimethyl ether; dipropylene glycoldi-n-butyl ether; N-methylpyrrolidone; diphenylmethane; diisopropylnaphthalene; petroleum fractions such as Solvesso® products (available from Exxon); alkylphenols, such as tert-butylphenol, nonylphenol, dodecylphenol and 8,11,14-pentadecatrienylphenol; styrenated phenol; bisphenols; aromatic hydrocarbon resins especially those containing phenol groups, such as ethoxylated or propoxylated phenols; adipates; sebacates; phthalates; benzoates; organic phosphoric or sulfonic acid esters; and sulfonamides.

The above aside, it is preferred that said solvents and non-reactive diluents constitute *in toto* less than 10 wt.%, in particular less than 5 wt.% or less than 2 wt.%, based on the total weight of the composition.

**Illustrative Embodiment of the Composition**

In accordance with an exemplary embodiment of the present invention, there is provided an one component (1K) curable composition comprising, based on the weight of the composition:

from 60 to 90 wt.% of a) at least one epoxy resin which has been modified with a hydrophobic elastomer, wherein said part a) comprises:

from 60 to 80 wt.% of ai) at least one dimer acid-modified epoxy resin; and,
from 0 to 10 wt.% of aii) at least one elastomer modified resin selected from the group consisting of carboxyl-terminated poly(butadiene-acrylonitrile) (CTBN) modified epoxy resins and urethane modified epoxy resins, and wherein each modified resin of part a) is characterized by an epoxide equivalent weight of from 200 to 800 g/eq, preferably from 250 to 750 g/eq.

from 3 to 20 wt.%, preferably from 5 to 10 wt.% of b) at least one epoxy resin distinct from the modified resin of part a);
from 1 to 15 wt.%, preferably from 1 to 10 wt.% of c) at least one compound which provides at least two amine hydrogens reactive toward epoxide groups, wherein part c) comprises or consists of dicyandiamide and further wherein said dicyandiamide has a mean particle size (d50) of from 0.5 to 100 μm as determined by dynamic light scattering; and,
from 0.01 to 2 wt.%, preferably from 0.01 to 1 wt.% of d) at least one accelerator, wherein part d) comprises or consists of at least one compound in accordance with Formula (I) or Formula (II):

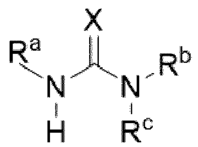

or,

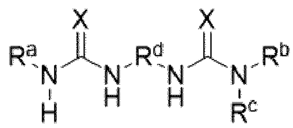

(I) (II)

wherein:

X is O;
$R^a$, $R^b$ and $R^c$ are independently selected from $C_1$-$C_8$ alkyl, $C_1$-$C_8$ hydroxyalkyl, $C_3$-$C_{12}$ cycloalkyl or $C_6$ aryl; and,
$R^d$ is $C_6$-$C_{18}$ arylene or $C_7$-$C_{18}$ alkylarylene,

wherein the composition further comprises core shell rubber particles in an amount up to 10 wt.% based on the total weight of the composition; and,
wherein the composition is characterized by a molar ratio of epoxide groups to epoxide-reactive groups ($E^R$) of from 0.9 :1 to 2.0 :1, preferably 1.1 : 1 to 1.6 : 1.

**METHODS AND APPLICATIONS**

To form a composition, the above described ingredients are brought together and mixed. As is known in the art, to form one component (1K) curable compositions, the elements of the composition are brought together and homogeneously mixed under conditions which inhibit or prevent the reactive components from reacting: as would be readily comprehended by the skilled artisan, this might include mixing conditions which limit or prevent exposure to moisture, heat or irradiation or which limit or prevent the activation of a constituent latent catalyst. As such, it will often be preferred that the curative elements are not mixed by hand but are instead mixed by machine - a static or dynamic mixer, for example - in predetermined amounts under anhydrous conditions without intentional heating or photo-irradiation.

In accordance with the broadest process aspects of the present invention, the above described compositions are applied to the material layer(s) and then cured *in situ*. Prior to applying the compositions, it is often advisable to pre-treat the relevant surfaces to remove foreign matter there from: this step can, if applicable, facilitate the subsequent adhesion of the compositions thereto. Such treatments are known in the art and can be performed in a single or multi-stage manner constituted by, for instance, the use of one or more of: an etching treatment with an acid suitable for the substrate and optionally an oxidizing agent; sonication; plasma treatment, including chemical plasma treatment, corona treatment, atmospheric plasma treatment and flame plasma treatment; immersion in a waterborne alkaline degreasing bath; treatment with a waterborne cleaning emulsion; treatment with a cleaning solvent, such as carbon tetrachloride or trichloroethylene; and, water rinsing, preferably with deionized or demineralized water. In those instances where a waterborne alkaline degreasing bath is used, any of the degreasing agent remaining on the surface should desirably be removed by rinsing the substrate surface with deionized or demineralized water.

In some embodiments, the adhesion of the coating compositions of the present invention to the preferably pre-treated substrate may be facilitated by the application of a primer thereto. Indeed primer compositions may be necessary to ensure efficacious fixture and / or cure times of the adhesive compositions on inactive substrates. Whilst the skilled artisan will be able to select an appropriate primer, instructive references for the choice of primer include but are not limited to: US Patent No. 3,855,040; US Patent No. 4,731,146; US Patent No. 4,990,281; US Patent No. 5,811,473; GB 2502554; and, US Patent No. 6,852,193.

The compositions are then applied to the preferably pre-treated, optionally primed surfaces of the substrate by conventional application methods such as: brushing; roll coating using, for example, a 4-application roll equipment where the composition is solvent-free or a 2-application roll equipment for solvent-containing compositions; doctor-blade application; printing methods; and, spraying methods, including but not limited to air-atomized spray, air-assisted spray, airless spray and high-volume low-pressure spray.

It is recommended that the compositions be applied to a surface at a wet film thickness of from 10 to 500 μm. The application of thinner layers within this range is more economical and provides for a reduced likelihood of deleterious thick cured regions. However, great control must be exercised in applying thinner coatings or layers so as to avoid the formation of discontinuous cured films.

The curing of the applied compositions of the invention typically occurs at temperatures in the range of from 40°C to 200°C, preferably from 50°C to 190°C, and in particular from 60°C to 180°C. The temperature that is suitable depends on the specific compounds present and the desired curing rate and can be determined in the individual case by the skilled artisan, using simple preliminary tests if necessary. Of course, curing at lower temperatures within the aforementioned ranges is advantageous as it obviates the requirement to substantially heat or cool the mixture from the usually prevailing ambient temperature. Where applicable, however, the temperature of the mixture formed from the respective elements of the one part (1K) composition may be raised above the mixing temperature and / or the application temperature using conventional means including microwave induction.

For completeness, it is noted that the present invention does not preclude the preparation of epoxy adhesives in the form of *"film adhesive"*. A pre-polymer mixture of epoxy resins, hardener, and other desired components is applied as a coating onto plastic substrate, rolled up and stored at a sufficiently low temperature to inhibit the chemical reactions between the components. When needed, the film adhesive is removed from the low temperature environment and applied to a metal or composite part, the backing is stripped off and the assembly completed and cured in an oven or autoclave.

The curable compositions according to the invention may find utility *inter alia* in: varnishes; inks; binding agents for fibers and / or particles; the coating of glass; the coating of mineral building materials, such as lime- and / or cement-bonded plasters, gypsum-containing surfaces, fiber cement building materials and concrete; the coating and sealing of wood and wooden materials, such as chipboard, fiber board and paper; the coating of metallic surfaces; the coating of asphalt- and bitumen-containing pavements; the coating and sealing of various plastic surfaces; and, the coating of leather and textiles.

By virtue of the fact that the compositions of the present invention are capable of creating a high binding strength in a short time, the compositions are optimally used for forming composite structures by surface-to-surface bonding of the same or different materials to one another. The binding together of wood and wooden materials and the binding together of metallic materials may be mentioned as exemplary adhesive applications of the present compositions. The binding together of metallic materials which are distinct from one another - for instance the binding of aluminium and steel - represents an important utility of the present composition.

It is also considered that the compositions of the present invention are suitable as pourable sealing compounds for electrical building components such as cables, fiber optics, cover strips or plugs. The sealants may serve to protect

those components against the ingress of water and other contaminants, against heat exposure, temperature fluctuation and thermal shock, and against mechanical damage.

In a particularly preferred embodiment, the composition of the present invention is employed an adhesive or sealant for shaped and jointed metallic components such as those found in vehicles and, in particular, the doors, trunks, hood shields and panels of automobiles. A sealant may be employed during either the manufacture or the repair of such components and will effectively serve the functions of sealing those components and preventing the corrosion thereof, as well as providing a damping functionality.

The following examples are illustrative of the present invention and are not intended to limit the scope of the invention in any way.

## EXAMPLES

The following commercial products are used in the Example:

| | |
|---|---|
| Epon 1001F: | Solid epoxy resin based on diglycidyl ether bisphenol A (DGEBA), having an epoxide equivalent weight of 550 g/eq., available from Westlake |
| Epon 828: | Liquid epoxy resin based on diglycidyl ether bisphenol A (DGEBA), having an epoxide equivalent weight of 190 g/eq., available from Westlake |
| Epon 834: | Semi-solid epoxy resin based on diglycidyl ether bisphenol A (DGEBA), having an epoxide equivalent weight of 260 g/eq., available from Westlake |
| Dyhard 100S: | Dicyandiamide, having an equivalent weight of 13 g/eq available from AlzChem Group AG |
| Dyhard 100SH: | Dicyandiamide, having an equivalent weight of 13 g/eq available from AlzChem Group AG. |
| Struktol Polycavit 3530: | Urethane modified epoxy resin having an epoxide equivalent weight of 465 g/eq., available from Schill and Seilacker. |
| Struktol Polydis 3614: | Carboxyl-terminated poly(butadiene-acrylonitrile) (CTBN) modified epoxy resin based on diglycidyl ether bisphenol A (DGEBA), having an epoxide equivalent weight of 330 g/eq., available from Schill and Seilacker. |
| Struktol Polycavit 3632: | Fatty acid modified epoxy resin based on diglycidyl ether bisphenol A (DGEBA) having an epoxide equivalent weight of 600 g/eq., available from Schill and Seilacker. |
| Dyhard UR700: | Substituted urea, available from AlzChem Group AG. |
| PV Ecthgrun GNX: | Green organic pigment, available from Clariant. |
| Efka RM 1900: | Thickener; modified hydrogenated castor oil, available from BASF. |
| Garamite 7305: | Mixed mineral rheology control agent, available from BYK Chemie. |
| Omyacarb 4HD: | Calcium carbonate filler, available from Omya. |
| Super 40 CaO: | White pulverized quick lime, available from the Marker Group. |
| Calcifin 20K: | Crystalline calcium carbonate, available from Alpha Calcit Fullstoff GmbH. |
| Luzenac 2: | Talcum, available from Imerys. |
| Kane Ace MX-154: | 40% Core Shell Rubber in Bisphenol-A based liquid epoxy resin, having an epoxide equivalent weight of 300 g/eq., available from Kaneka North America. |
| Cab-O-Sil Ultrabond: | Fumed silica, available from Cabot Corporation. |
| Teroson RB 5191 GB: | Heat curing, solvent free, one component (1K) sealant based on rubber, available from Henkel Corporation. |

### Preparation Example 1

The formulations IA1, IA2 and IA3 described in Table 1 hereinbelow were formed under mixing.

| Ingredient | IA1 Percentage by Weight of Composition (wt.%) | IA2 Percentage by Weight of Composition (wt.%) | IA3 Percentage by Weight of Composition (wt.%) |
|---|---|---|---|
| Epon 1001F | | 1.00 | |
| Epon 828 | | 4.00 | |
| Epon 834 | | | 5.00 |
| Dyhard 100S | | 1.60 | 1.60 |

(continued)

| Ingredient | IA1 Percentage by Weight of Composition (wt.%) | IA2 Percentage by Weight of Composition (wt.%) | IA3 Percentage by Weight of Composition (wt.%) |
|---|---|---|---|
| Dyhard 100SH | 2.45 | | |
| Struktol Polydis 3614 | 8.00 | 9.00 | 9.00 |
| Struktol Polycavit 3632 | 57.00 | 65.00 | 65.00 |
| Struktol Polycavit 3530 | | 4.00 | 4.00 |
| Akrochem E 773 Blue Powder | | 0.05 | 0.05 |
| PV Fast Green GNX | 0.05 | | |
| Dyhard UR300AB | 0.30 | | |
| Dyhard UR700 | | 0.48 | 0.48 |
| Garamite 7305 | | 3.50 | 3.50 |
| Super 40 CaO | 3.00 | | |
| Calcium Oxide | | 2.00 | 2.00 |
| Microtalc MP12-50 | | 0.50 | 0.50 |
| Efka RM 1900 | 2.20 | | |
| Kane Ace MX-154 | 20.00 | 4.00 | 4.00 |
| Omyacarb 4HD | 2.00 | | |
| Hubercarb Q 325 | | 2.87 | 2.87 |
| Luzenac 2 | 1.00 | | |
| Cab-O-Sil Ultrabond | 4.00 | | |
| Cab-O-Sil TS-720 | | 2.00 | 2.00 |
| **Total** | **100.00** | **100.00** | **100.00** |
| **Molar Ratio of Epoxide: Epoxide Reactive Groups** | **1.0** | **1.4** | **1.5** |

**Example 1**

The following tests are performed on the compositions and bonded structures obtained therefrom:

Lap Shear Strength Testing: The application substrates were aluminium (AA6016) and stainless steel (HDG) each having a thickness of 0.1 inch: the tested adhesive compositions were interposed between said aluminium and steel substrates to form an *"alu-steel"* bonded structure. Each substrate was cut into samples of 2.5 cm x 10 cm (1" x 4") in size for tensile testing. Tensile lap shear (TLS) testing was performed at room temperature based upon DIN EN 2243-1:2007. The bond overlapping area for each stated substrate sample was 2.5 cm x 2.5 cm (1" x 1") with a bond thickness of 0.1 cm (40 mil). The applied one-part (1K) adhesive composition was cured in the overlapping region under one of two conditions: C1) 20 minutes at 150°C followed by 1 hour at room temperature and 40 minutes at 120°C; C2) 20 minutes at 215°C, 1 hours at room temperature and 40 minutes at 160°C. The bonded structures were then stored at room temperature for 24 hours prior to initial tensile testing.

Neutral salt spray (NSS): This test was carried out according to ASTM B117 with a 5% NaCl solution at 35°C. The coated panels were disposed in the spray chamber (ERICHSEN Model 606/400 L) at 15 - 30° from the vertical for 500 hours. The test panels were not allowed to contact other surfaces in the chamber and condensed or corrosion products on their surfaces were not permitted to cross-contaminate each other. Photographic recording of the test panels was performed each 24 hours. After exposure, test panels were rinsed in deionized water to remove salt deposits from their surface and then immediately dried. From a visual inspection of the coated panels at 500 hours: i)

coated panels for which less than 5% by area showed corrosion products were held to have passed said test; and, ii) conversely, coated panels showing ≥ 5% by area of corrosion products were held to have failed said test.

T-Peel Resistance (N/mm): The testing of this parameter was based on the following standard: ASTM-D903 - *Standard Test Method for Peel or Stripping Strength of Adhesive Bonds.* At least three test bonded structures were assembled and tested for each test point. In preparing the assemblies, the applied one-part (1K) adhesive composition was cured in the overlapping region under one of two conditions: C1) 20 minutes at 150°C followed by 1 hour at room temperature and 40 minutes at 120°C; C2) 20 minutes at 215°C, 1 hours at room temperature and 40 minutes at 160°C. Rigid glass plates were placed over each specimen and the obtained assembly was clamped using four equally spaced clamps on each side of the assembly - for a total of eight clamps - to ensure that the clamping load was evenly distributed. The assembly was permitted to cool to ambient temperature. The clamps were removed after 24 hours and the bonds were pulled to provide T-peel results.

Tensile Properties: The tensile strength, tensile modulus and elongation at break of the composition - as cured at 170°C for 20 minutes, 1 hour at room temperature and for 40 minutes at 130 °C and prepared as Type 5A specimen - were determined in accordance with ISO EN 527-1 using an Instron 6800 Series testing machine and a pull rate of 1 mm/min.

Glass Transition Temperature (Tg): This is measured by Dynamic Mechanical Analysis (DMA) in accordance with ASTM E1640 *Standard Test Method for Assignment of the Glass Transition Temperature By Dynamic Mechanical Analysis* (DMA). A temperature sweep of from 20 to 150°C was employed at a ramp rate of 2K/min.

Thermogravimetric analysis (TGA): A static TGA test was performed wherein a weight of each cured adhesive was disposed in a pin-holed aluminium crucible in a Mettler Toledo 85 1e TGA/SDTA device; under nitrogen purging the samples were held at 180°C for 30 minutes and weight loss was determined.

The results of the aforementioned testing are provided in Table 2 herein below:

Table 2

| **Property** | **IA1** | **IA2** | **IA3** |
|---|---|---|---|
| Initial Lap Shear Strength under Curing Condition C1 (MPa) | 28 | 27 | 27 |
| Initial Lap Shear Strength under Curing Condition C2 (MPa) | 30 | 25 | 26 |
| T-Peel Strength under Curing Condition C1 (N/mm) | 181 | 183 | 180 |
| T-Peel Strength under Curing Condition C2 (N/mm) | 229 | 172 | 172 |
| Neutral Salt Spray Tests (ASTM B117) | Pass | Pass | Pass |
| Tensile Modulus (MPa) | 1030 | 1023 | 1028 |
| Elongation at Break (%) | 47 | 99 | 95 |
| Tensile Strength (MPa) | 19 | 22 | 23 |
| Glass Transition Temperature (Tg, °C) | 64 | 57 | 54 |

**Example 2**

The compositions were subjected to the following rheological tests:

Viscosity: The viscosity of the composition was measured using the Anton Paar Viscometer, Model MCR 72 at 40°C and 50% Relative Humidity (RH). Measurements were performed using the parallel plate PP20 at a shear rate of 15.5 $s^{-1}$.

Storage elastic modulus E' and Loss Factor (tan δ): These parameters were measured by Dynamic Mechanical Analysis (DMA) at a frequency of 1 Hz while elevating the measurement temperature from -30°C to 80°C using DMA Q800 V21.6 Build 96, available from TA Instruments. The following curing conditions were applied to the composition:

C1): 20 minutes at 150°C followed by 1 hour at room temperature and 40 minutes at 120°C;

C2): 20 minutes at 215°C, 1 hours at room temperature and 40 minutes at 160°C.

The results of these rheological tests are provided in Table 3 herein below:

Table 3

| **Property** | | **IA1** | **IA2** | **IA3** |
|---|---|---|---|---|
| Viscosity at 40°C (Pa.s) | | 439 | 280 | 295 |
| tan δ under curing condition C1) | 20°C | 0.12 | 0.10 | 0.10 |
| | 40°C | 0.29 | 0.33 | 0.32 |
| | 60°C | 0.60 | 0.53 | 0.54 |
| tan δ under curing condition C2) | 20°C | 0.06 | 0.09 | 0.09 |
| | 40°C | 0.16 | 0.32 | 0.32 |
| | 60°C | 0.51 | 0.53 | 0.55 |

These results show a superior properties of the examples regarding viscosity and tan δ properties. However, the examples IA2 and IA3 are even better since the relatively lower viscosity of these composition improves the means by which that composition may be applied during, for instance, the preparation of a bonded structure. Additionally the tan δ values are in a more preferred range. Under the curing condition C1 the compositions of the invention preferably have tan δ of at least 0.1 at 20°C, of at least 0.3 at 40 °C and of at least 0.3 at 60 °C, under the curing condition C2 preferably of at least 0.09 at 20°C, of at least 0.2 at 40 °C and of at least 0.3 at 60 °C.

In view of the foregoing description and examples, it will be apparent to those skilled in the art that equivalent modifications thereof can be made without departing from the scope of the claims.

## Claims

**1.** An one component (1K) curable composition comprising, based on the weight of the composition:

from 50 to 90 wt.% of a) at least one epoxy resin which has been modified with a hydrophobic elastomer, said modified epoxy resin having an epoxide equivalent weight of from 200 to 1000 g/eq;
from 2 to 25 wt.% of b) at least one epoxy resin distinct from the modified resin of part a);
c) at least one compound which provides at least two amine hydrogens reactive toward epoxide groups; and,
from 0.01 to 5 wt.% of d) at least one accelerator,

wherein the composition preferably is **characterized by** a molar ratio of epoxide groups to epoxide-reactive groups ($E^R$) of $0.7{:}1 < E^R \leq 3.0{:}1$.

**2.** The one component (1K) curable composition according to claim 1 comprising, based on the weight of the composition:

from 60 to 90 wt.%, preferably from 65 to 85 wt.% of a) at least one epoxy resin which has been modified with a hydrophobic elastomer, said modified epoxy resin having an epoxide equivalent weight of from 200 to 1000 g/eq;
from 3 to 20 wt.%, preferably from 5 to 10 wt.% of b) at least one epoxy resin distinct from the modified resin of part a);
from 1 to 15 wt.%, preferably from 1 to 10 wt.% of c) at least one compound which provides at least two amine hydrogens reactive toward epoxide groups; and,
from 0.01 to 2 wt.%, preferably from 0.01 to 1 wt.% of d) at least one accelerator,

wherein the composition preferably is **characterized by** a molar ratio of epoxide groups to epoxide-reactive groups ($E^R$) of from 0.9: 1 to 2.0:1.

**3.** The composition according to claim 1 or claim 2, wherein part a) of the composition comprises, based on the weight of the composition:

from 60 to 80 wt.% of ai) at least one dimer acid-modified epoxy resin; and,
from 5 to 20 wt.% of aii) at least one elastomer modified resin selected from the group consisting of carboxyl-terminated poly(butadiene-acrylonitrile) (CTBN) modified epoxy resins and urethane modified epoxy resins,
wherein each modified resin of part a) is **characterized by** an epoxide equivalent weight of from 200 to 800 g/eq, preferably from 250 to 750 g/eq.

**4.** The composition according to claim 3, wherein:

the or each dimer acid-modified epoxy resin of part ai) is **characterized by** an epoxide equivalent weight of from 500 to 750 g/eq; and / or,
the or each elastomer modified resin of part aii) is **characterized by** an epoxide equivalent weight of from 250 to 500 g/eq.

**5.** The composition according to any one of claims 1 to 4, wherein part c) comprises or consists of a polyamine at least two amine hydrogens reactive toward epoxide groups.

**6.** The composition according to claim 5, wherein the or each polyamine contains primary and / or secondary amine groups and has an equivalent weight per primary or secondary amine group of not more than 150 g/eq., more preferably not more than 125 g/eq.

**7.** The composition according to any one of claims 1 to 6, wherein part c) comprises or consists of dicyandiamide and further wherein said dicyandiamide has a mean particle size (d50) of from 0.5 to 100 μm as determined by dynamic light scattering.

**8.** The composition according to any one of claims 1 to 7, wherein part d) comprises or consists of at least one accelerator selected from the group consisting of: tertiary amines; urea derivatives; thiourea derivatives; and, amidines.

**9.** The composition according to claim 8, wherein part d) comprises or consists of at least one compound in accordance with Formula (I) or Formula (II):

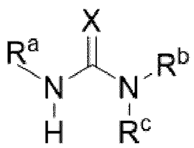

(I)

or,

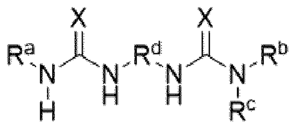

(II)

wherein:

X is O or S;
$R^a$, $R^b$ and $R^c$ are independently selected from $C_1$-$C_{12}$ alkyl, $C_1$-$C_{12}$ hydroxyalkyl, $C_3$-$C_{18}$ cycloalkyl or $C_6$-$C_{18}$ aryl; and,
$R^d$ is $C_6$-$C_{18}$ arylene or $C_7$-$C_{18}$ alkylarylene.

**10.** The composition according to claim 9, wherein having regard to Formula (I) and Formula (II):

Xis O;
$R^a$, $R^b$ and $R^c$ are independently selected from $C_1$-$C_8$ alkyl, $C_1$-$C_8$ hydroxyalkyl, $C_3$-$C_{12}$ cycloalkyl or $C_6$ aryl; and,
$R^d$ is $C_6$-$C_{18}$ arylene or $C_7$-$C_{18}$ alkylarylene.

**11.** The composition according to claim 9, wherein part d) consists of at least one compound selected from the group consisting of: phenyl dimethyl urea; N,N'-dimethyl-N,N'-diphenyl-urea; N,N-dimethyl-N'-tolyl urea; N,N-dibutyl-N'-phenyl urea; N,N-dihydroxyethyl-N'-phenyl urea; N,N-dicyclohexyl-N'-isopropyl urea; 1,1'-(4-methyl-1,3-phenylene) bis(3,3-dimethylurea); 3,4-dichlorophenyl dimethyl urea (Diuron); 4-chlorophenyl dimethyl urea (Monuron); and, 4,4'-methylene bis(phenyl dimethyl urea).

**12.** The composition according to any one of claims 1 to 11 further comprising core shell rubber particles in an amount up to

10 wt.% based on the total weight of the composition.

**13.** The composition according to any one of claims 1 to 12, **characterized by** a viscosity of from 100 to 500 Pa.s, preferably from 200 to 500 Pa.s, as determined at 20°C at a shear rate of 15.5 $s^{-1}$.

**14.** A cured product obtained from the one component (1K) composition as defined in any one of claims 1 to 13, wherein said cured product is preferably **characterized by** a loss factor (tan $\delta$) of at least 0.3 as determined by Dynamic Mechanical Analysis (DMA) at 1Hz and 40°C.

**15.** The use of the cured product as defined in claim 14 as an adhesive or sealant in vehicle assembly or repair.

Europäisches Patentamt
European Patent Office
Office européen des brevets

# EUROPEAN SEARCH REPORT

Application Number
EP 23 20 6759

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/083633 A1 (DESAI UMESH C [US] ET AL) 24 March 2016 (2016-03-24) * paragraphs [0002], [0003], [0099], [0156] - [0162]; example 2; table 5 * | 1-15 | INV. C08G59/18 C08G59/50 C08G59/68 C08L63/00 C08G59/06 C08G59/14 |
| A,D | US 2019/062611 A1 (NISHIDA TAKATOMI [JP] ET AL) 28 February 2019 (2019-02-28) * paragraph [0001]; claims 1,8,9; examples 2,3; table 1 * | 1-15 | |

TECHNICAL FIELDS SEARCHED (IPC)

C08G
C09J
C08L

The present search report has been drawn up for all claims

1

| Place of search | Date of completion of the search | Examiner |
|---|---|---|
| The Hague | 4 March 2024 | Goulis, Panagiotis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 23 20 6759

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2024

| Patent document cited in search report | Publication date | Patent family member(s) | Publication date |
|---|---|---|---|
| US 2016083633 A1 | 24-03-2016 | US 2014150970 A1 | 05-06-2014 |
| | | US 2016083633 A1 | 24-03-2016 |
| | | US 2021198538 A1 | 01-07-2021 |
| | | US 2022204822 A1 | 30-06-2022 |
| | | US 2022204823 A1 | 30-06-2022 |
| | | US 2022213362 A1 | 07-07-2022 |
| US 2019062611 A1 | 28-02-2019 | CN 109423249 A | 05-03-2019 |
| | | DE 102018120474 A1 | 28-02-2019 |
| | | JP 7109164 B2 | 29-07-2022 |
| | | JP 2019038926 A | 14-03-2019 |
| | | US 2019062611 A1 | 28-02-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H02150484 A
- US 2010092733 A1, Blank
- US 2019062611 A1, Nishida
- GB 889050 A
- GB 874430 A
- GB 848671 A
- US 42699945 B
- US 4218543 A
- US 4374210 A
- US 3535342 A
- US 4835289 A
- US 4892954 A
- GB 1485925 A
- EP 0119840 A
- EP 0520426 B1
- US 3855040 A
- US 4731146 A
- US 4990281 A
- US 5811473 A
- GB 2502554 A
- US 6852193 B